# EUROPEAN PATENT SPECIFICATION

(11) **EP 4 218 976 B1**
(45) Date of publication and mention of the grant of the patent: **22.04.2026**
(21) Application number: 21910352.0
(22) Date of filing: 09.12.2021
(51) Int. Cl.: A63F 13/49, A63F 13/53, A63F 13/67

(54) **CONTROL SYSTEM, INFORMATION SYSTEM, INFORMATION PROCESSING METHOD, AND PROGRAM**
STEUERUNGSSYSTEM, INFORMATIONSSYSTEM, INFORMATIONSVERARBEITUNGSVERFAHREN UND PROGRAMM
SYSTÈME DE COMMANDE, SYSTÈME D'INFORMATIONS, PROCÉDÉ DE TRAITEMENT D'INFORMATIONS, ET PROGRAMME

(30) Priority: 25.12.2020 JP 2020217910
(43) Date of publication of application: 02.08.2023
(73) Proprietor: Konami Digital Entertainment Co., Ltd., Tokyo 1040061 (JP)
(72) Inventor: KANAHARA, Toshiaki, Tokyo 1040061 (JP); CHIBA, Shigeru, Tokyo 1040061 (JP); SHINPO, Tsuguo, Tokyo 1040061 (JP); INOUE, Kai, Tokyo 1040061 (JP); HIRAI, Junki, Tokyo 1040061 (JP); SAKAI, Akira, Tokyo 1040061 (JP)
(74) Representative: Winter, Brandl - Partnerschaft mbB
(86) International application number: PCT/JP2021/045331
(87) International publication number: WO 2022/138203

(56) References cited:
- CN-A- 105 468 607
- JP-A- 2002 239 225
- JP-A- 2017 074 307
- JP-A- H11 253 659

## Description

### TECHNICAL FIELD

The present invention relates to games.

### BACKGROUND ART

As the spread of events (e-sports) in which a plurality of players compete in various games, etc., various techniques are proposed for delivering a video (hereinafter referred to as a "game video") representative of the status of a game (for example, as in Patent Document 1). Text for a commentary on the status of the game is added to the game video.

### Related Art Document

### Patent Document

Patent Document 1: Japanese Patent Application Laid-Open Publication 2016-189803

Moreover, document JP 2002 239225 A describes an on-the-spot broadcasting device which automatically performs an on-the-spot broadcasting corresponding with the game development of a game system. The device includes a sound data storage unit, a pattern discriminating unit, and a sound-synthesizing unit. The sound data storage unit stores specified sound data for the on-the-spot broadcasting while corresponding with a plurality of game development patterns in advance. The pattern discriminating unit discriminates the game development patterns of the game system, and outputs a reading command for the sound data corresponding with the game development pattern. The sound synthesizing unit reads the sound data for the on-the-spot broadcasting from the sound data storage means, based on the reading command, and synthesizes a sound signal. The game-on-the-spot broadcasting device auditorily outputs the on-the-spot broadcasting corresponding with the game development.

### SUMMARY OF THE INVENTION

### Problem to be Solved by the Invention

However, in order to add text for a commentary to a game video, the provider of the game video must manually enter the text in parallel with the progress of the game, resulting in having a problem in that a work load is excessive. In view of the circumstances described above, an object of the present invention is to reduce a load for entering information indicative of a commentary on a game. The object is solved by the features of the independent claims. The dependent claims are directed to preferred embodiments of the invention.

### Means for Solving Problem

The invention is defined by the appended claims.

### BRIEF DESCRIPTION OF THE DRAWINGS

Fig. 1 is a block diagram showing a configuration of an information system according to a first embodiment.
Fig. 2 is a schematic diagram of a distribution image.
Fig. 3 is a block diagram showing a configuration of a game system.
Fig. 4 is a flow chart showing a specific procedure of game processing.
Fig. 5 is a schematic diagram of status data X.
Fig. 6 is a block diagram showing a configuration of a control system.
Fig. 7 is a block diagram showing a functional configuration of the control system.
Fig. 8 is a schematic diagram of supplementary data.
Fig. 9 is a schematic diagram of reference data.
Fig. 10 is a flow chart showing a specific procedure of generation processing.
Fig. 11 is a flow chart showing a specific procedure of commentary processing.
Fig. 12 is a flow chart showing a specific procedure of registration.
Fig. 13 is a block diagram showing a configuration of a terminal apparatus.
Fig. 14 is a schematic diagram of setting data in a second embodiment.
Fig. 15 is a flow chart showing a specific procedure of commentary processing in the second embodiment.
Fig. 16 is a block diagram showing a functional configuration of a game system in a third embodiment.
Fig. 17 is a flow chart showing a specific procedure of game processing in the third embodiment.
Fig. 18 is a block diagram showing a functional configuration of a terminal apparatus in a fourth embodiment.
Fig. 19 is a flow chart showing a specific procedure of play processing in the fourth embodiment.
Fig. 20 is a schematic diagram of a distributed video in a fifth embodiment.
Fig. 21 is a schematic diagram of a distributed video when an operation image is operated in the fifth embodiment.
Fig. 22 is a block diagram showing a configuration of an information system according to a modification.
Fig. 23 is a block diagram showing a configuration of an information system according to a modification.

### MODES FOR CARRYING OUT THE INVENTION

### First Embodiment

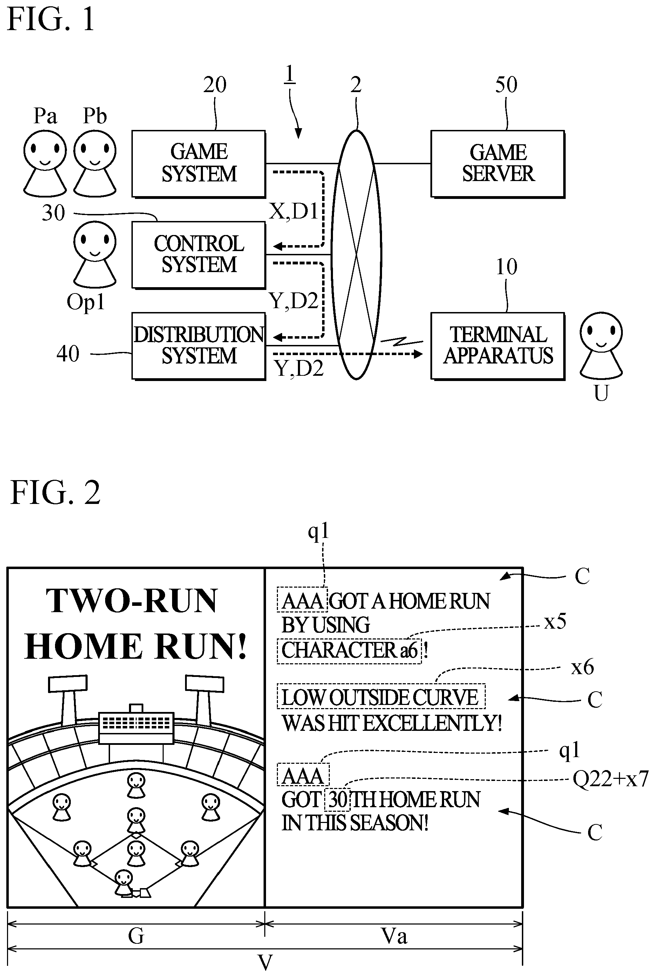

Fig. 1 is a block diagram showing a configuration of an information system 1 according to a first embodiment. The information system 1 is a computer system configured to distribute a video (hereinafter, referred to as a "distributed video") V, which is related to a game played by a player Pa and by a player Pb, to a terminal apparatus 10. For example, in a competition event (e-sports) in which a large number of players participates, the player Pa and the player Pb play against each other in a baseball game. The baseball game is a game in which the team of a player Pa, which consists of a plurality of characters, and the team of a player Pb, which consists of a plurality of characters, play against each other in baseball. The distributed video V, which is content that includes imagery (video and still images) and audio sounds, is delivered in real time to the terminal apparatus 10 in parallel with the progress of the baseball game (i.e., in live streaming). In the following explanation, when it is unnecessary to particularly distinguish the player Pa and the player Pb from each other, each of the players is simply referred to as a "player P."

Fig. 2 is a schematic diagram showing the distributed video V. As shown in Fig. 2, the distributed video V includes a game video G and commentary text C. The game video G is a video representative of the status of the baseball game in which the player Pa and the player Pb play against each other. One or more pieces of commentary text C are displayed in a commentary area Va adjacent to the game video G in the distributed video V. The commentary text C is text for explaining various states such as occurrence of an event in the baseball game. The commentary text C includes one or more words, one or more sentences, or a combination thereof. The commentary text C includes not only information that can be directly understood from the game video G, but also various information that cannot be understood from the game video G.

The terminal apparatus 10 in Fig. 1 is an apparatus that can play the distributed video V. For example, a portable or stationary type information terminal, such as a mobile phone, a smartphone, a tablet terminal, or a personal computer, may be used as the terminal apparatus 10. Alternatively, a display such as a television receiver may be used as the terminal apparatus 10, for example. The terminal apparatus 10 plays the distributed video V of Fig. 2 delivered from the information system 1. In other words, the commentary text C is displayed together with the game video G. A user U of the terminal apparatus 10 watches, in real time, the distributed video V representative of the status of the baseball game in parallel with the progress of the baseball game. Specifically, the user U understands the progress of the game by watching the game video G of the distributed video V, and the user U can confirm detailed information on the status of the progress by referring to the commentary text C. Actually, the distributed video V is delivered to respective terminal apparatuses 10; however, in the following explanation, the terminal apparatus 10 will be focused on for convenience.

As shown in Fig. 1, the information system 1 includes a game system 20, a control system 30, a distribution system 40, and a game server 50. Each of the elements of the information system 1 is communicable with each other via a communication network 2 such as the Internet. In addition, the distribution system 40 is communicable with the terminal apparatus 10 via the communication network 2.

The game system 20 controls the baseball game. Specifically, the game system 20 not only progresses the baseball game in accordance with operations from each player P, but also transmits status data X and video data D1 to the control system 30. The status data X is data indicative of a current status of the baseball game. The video data D1 is data indicative of a video of the baseball game. The control system 30 not only generates commentary data Y from the status data X, but also generates video data D2 from the video data D1. The commentary data Y is text data indicative of the commentary text C described above. The video data D2 is data indicative of the game video G of the baseball game. The distribution system 40 transmits the commentary data Y and the video data D2 generated by the control system 30 to the terminal apparatus 10. The distributed video V of Fig. 2, which includes the commentary text C indicated by the commentary data Y and the game video G indicated by the video data D2, is displayed by the terminal apparatus 10.

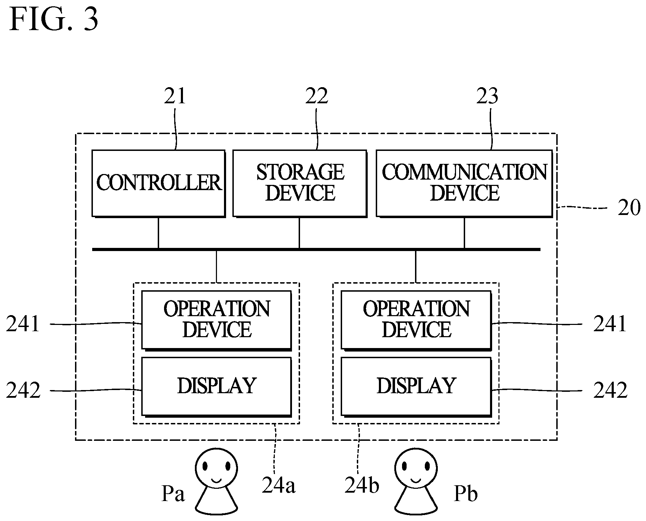

Fig. 3 is a block diagram showing a configuration of the game system 20. As shown in Fig. 3, the game system 20 is a computer system that includes a controller 21, a storage device 22, a communication device 23, and a plurality of game units 24 (24a, 24b). The game system 20 is not only achieved as a single device but may be also achieved by a set of a plurality of devices separate from each other.

The controller 21 is constituted by one or more processors configured to control each of the elements of the game system 20, for example. Specifically, the controller 21 is constituted by one or more types of processors such as a central processing unit (CPU), a graphics processing unit (GPU), a digital signal processor (DSP), a field programmable gate array (FPGA), or an application specific integrated circuit (ASIC).

The storage device 22 is one or more memories configured to store a program executed by the controller 21 and various data used by the controller 21. For example, a known recording medium such as a semiconductor recording medium and a magnetic recording medium, or a combination of different types of recording mediums may be used as the storage device 22. The communication device 23 communicates with the control system 30 via the communication network 2.

Each of the game units 24 (24a, 24b) is a user interface used to play the game by the player P. The player Pa uses the game unit 24a, whereas the player Pb uses the game unit 24b. In addition to a device dedicated to the baseball game, for example, a general-purpose information terminal, such as a smartphone, a tablet terminal, or a personal computer, may be used as the game unit 24.

Each of the game units 24 includes an operation device 241 and a display 242. The operation device 241 is an input device configured to receive operations made by each player P. The display 242 displays various imagery under the control of the controller 21. For example, the display 242 displays play imagery representative of the status of the game. The play imagery is a video that is visually recognized by each player P during playing of the game. The play imagery displayed by the display 242 of the game unit 24a may be the same as, or may be different from, the play imagery displayed by the display 242 of the game unit 24b.

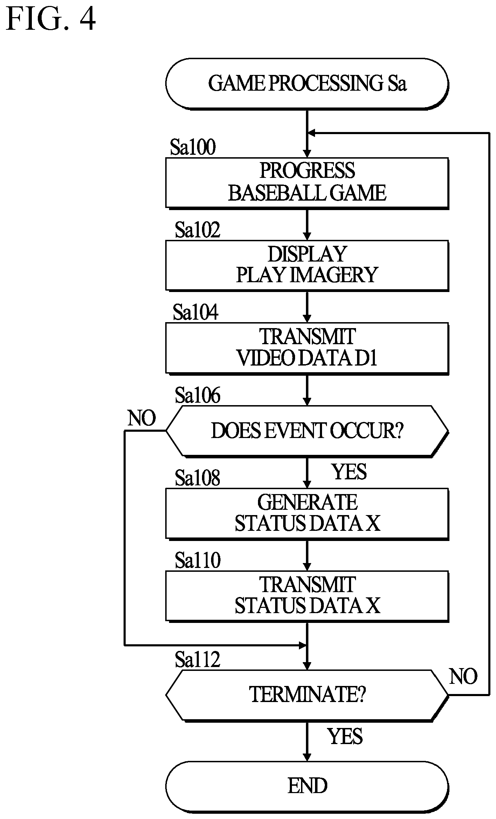

Fig. 4 is a flow chart showing a specific procedure of processing (hereinafter, referred to as "game processing") Sa in which the controller 21 controls the baseball game. For example, the game processing Sa starts in response to an instruction to start the baseball game being entered into the operation device 241.

When the game processing Sa starts, the controller 21 progresses the baseball game in accordance with operations from each of the players P to the operation device 241 (Sa100). The controller 21 causes each of the displays 242 to display the play imagery (Sa102). In addition, the controller 21 generates the video data D1 of a video representative of the current status of the baseball game to transmit the video data D1 from the communication device 23 to the control system 30 (Sa104). The video indicated by the video data D1 is, for example, a video similar to the play imagery displayed by the display 242 in one of the game units 24. Alternatively, the video data D1, which indicates a video generated separately from the play imagery, may be generated.

The controller 21 determines whether an event occurs during the progress of the baseball game (Sa106). The event is among various events generated at respective predetermined timings in accordance with the progress of the baseball game. For example, the event may be a start event of the baseball game, or it may be an end event of the baseball game, etc. As for a team that is at bat in the baseball game, examples of the event may include various events such as "hit," "home run," "base stealing," "score," and "batter change," for example. As for a team that is in the field in the baseball game, examples of the event may include various events such as "grabbing strikeout," "pickoff attempt," "catch a fly," and "pitcher change," for example.

In response to the event occurring (Sa106: YES), the controller 21 generates status data X on the event (Sa108) to transmit the status data X from the communication device 23 to the control system 30 (Sa110). On the other hand, in response to no event occurring (Sa106: NO), neither generation (Sa108) nor transmission (Sa110) of status data X is executed.

The controller 21 determines whether the baseball game terminates (Sa112). In response to the baseball game not terminating (Sa112: NO), the controller 21 returns the processing to step Sa100. As shown above, in the first embodiment, the video data D1 and the status data X are transmitted to the control system 30 in parallel with the progress of the baseball game. Specifically, the video data D1 is transmitted sequentially at predetermined time intervals, whereas the status data X is transmitted each time the event occurs. In response to the baseball game terminating (Sa112: YES), the controller 21 terminates the game processing Sa.

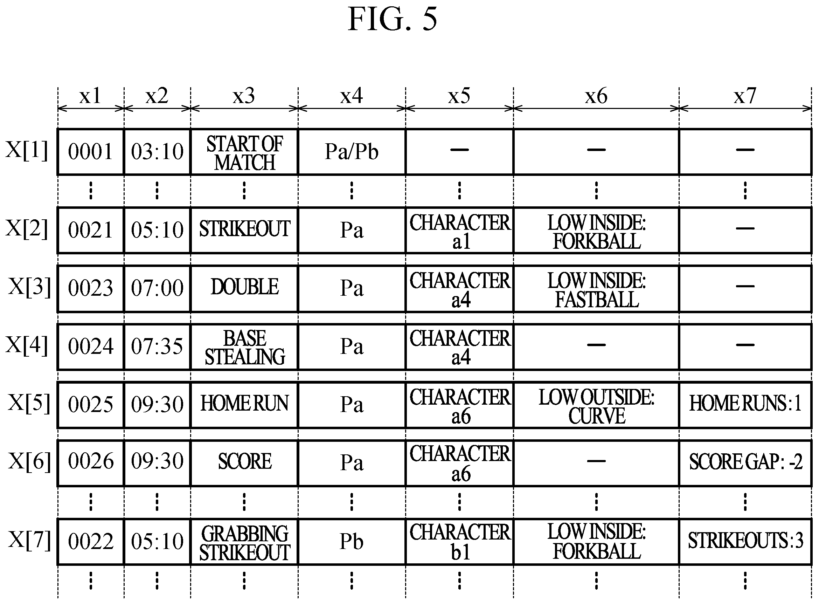

Fig. 5 is a schematic diagram of the status data X corresponding to an event. In Fig. 5, a plurality of pieces of status data X (X[1], X[2], X[3] ...) corresponding to different types of events are described. As shown in Fig. 5, the status data X includes identification information x1, occurrence time x2, an event type x3, a target player x4, a target character x5, detailed information x6, and control information x7.

The identification information x1 is a string of codes for identifying an event in a match of the baseball game. The occurrence time x2 is time at which the event occurred. For example, a point in time at which the match of the baseball game started, or a period in time that has elapsed since a point in time at which transmission of the video data D1 was started, is designated as the occurrence time x2. The event type x3 is a type related to the contents of the event. For example, a type such as "start of match," "strikeout," "grabbing strikeout," "hit," "base stealing," "home run," and "score" is designated as the event type x3.

The target player x4 is information indicative of a player P that causes the event. For example, regarding an event particular to an offense such as "strikeout," "hit," "base stealing," "home run," and "score," a player P (player Pa in Fig. 5) of the offense is designated as the target player x4. Regarding an event particular to a defense such as "grabbing strikeout," a player P (player Pb in Fig. 5) of the defense is designated as the target player x4.

The target character x5 is information indicative of a character, which causes the event, among a plurality of characters appearing in the baseball game. For example, regarding an event on the offense such as "strikeout," "hit," and "home run," a batter character of the offense team is designated as the target character x5. Regarding an event on the defense such as "grabbing strikeout," a pitcher character of the defense team is designated as the target character x5.

The detailed information x6 is detailed information on the event. For example, regarding an event such as "strikeout," "grabbing strikeout," "hit", and "home run," a pitch type selected by the player P of the defense at the time of pitching is set as the detailed informational x6. Regarding events not related to pitching such as "base stealing," the detailed information x6 is not set.

The control information x7 is information that specifies a current numerical value for a variable that varies related to the baseball game. For example, the control information x7 specifies the current numerical value for a variable such as "the number of grabbing strikeouts," "the number of home runs," and "score gap." In Fig. 5, "home runs: 1" means that "the number of home runs" of the player Pa has been changed to "1" due to an occurrence of an event of a "home run." In Fig. 5, "strikeouts: 3" means that "the number of strikeouts" grabbed by the player Pb has been changed to "3" due to an occurrence of an event of "grabbing strikeout." In addition, "score gap: - 2" means that the "score gap" between the player Pa and the player Pb has been changed to "- 2" an occurrence of an event of "score."

As will be understood from the above description, the status data X indicates an event that occurs in the baseball game. As described above, each time an event occurs during the progress of the baseball game, the status data X is transmitted from the game system 20 to the control system 30. The format or the contents of the status data X is not limited to the example of Fig. 5.

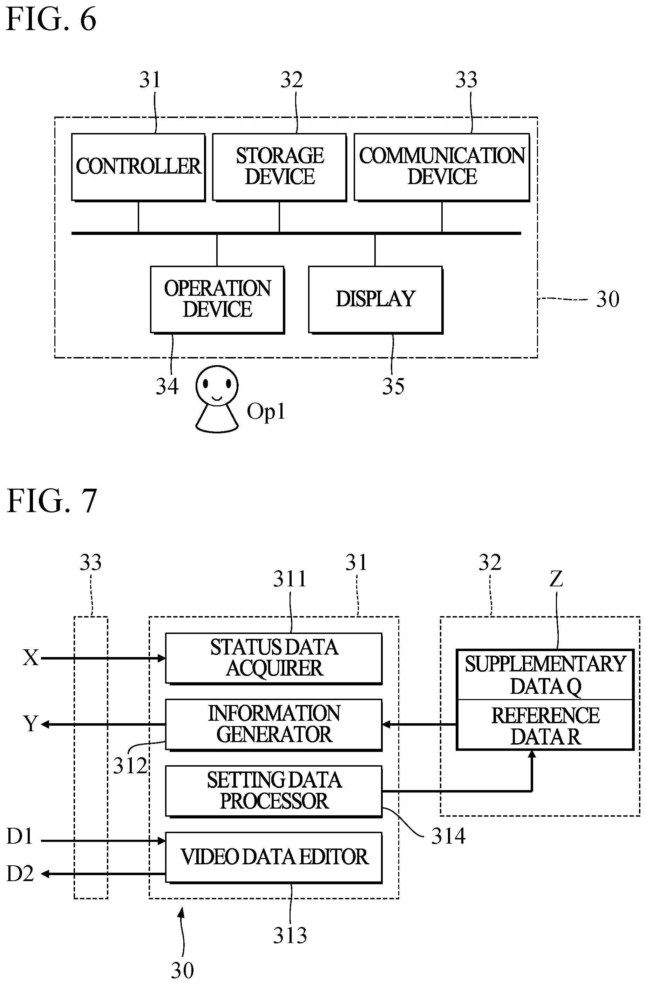

Fig. 6 is a block diagram showing a configuration of the control system 30. As shown in Fig. 6, the control system 30 is a computer system that includes a controller 31, a storage device 32, a communication device 33, an operation device 34, and a display 35. For example, a portable or stationary information terminal, such as a mobile phone, a smartphone, a tablet terminal, or a personal computer, may be used as the control system 30. The control system 30 may be a single device, but may also be a set of a plurality of devices separate from each other.

The controller 31 is constituted by one or more processors configured to control each of the elements of the control system 30, for example. Specifically, the controller 31 is constituted by one or more types of processors such as a CPU, a GPU, a DSP, an FPGA, or an ASIC.

The storage device 32 is one or more memories configured to store a program executed by the controller 31 and various data used by the controller 31. For example, a known recording medium such as a semiconductor recording medium and a magnetic recording medium, or a combination of different types of recording mediums may be used as the storage device 32.

The communication device 33 communicates with each of the game system 20 and the distribution system 40 via the communication network 2. Specifically, the communication device 33 receives the video data D1 and the status data X from the game system 20. The communication device 33 transmits the video data D2 and the commentary data Y to the distribution system 40.

The operation device 34 is an input device configured to receive operations made by an administrator Op1. The administrator Op1 is an operator that manages and operates the control system 30. For example, the operation device 34 is an operation element operable by the administrator Op1, or a touch panel to detect contact made by the administrator Op1. The display 35 displays various imagery under the control of the controller 31.

Fig. 7 is a block diagram showing a functional configuration of the control system 30. As shown in Fig. 7, the controller 31 of the control system 30 executes the program stored in the storage device 32 to implement a plurality of functions (a status data acquirer 311, an information generator 312, a video data editor 313, and a setting data processor 314).

The video data editor 313 generates the video data D2 by processing the video data D1, which is received from the game system 20 by the communication device 33. Specifically, the video data editor 313 generates the video data D2 by executing editing processing and conversion processing on the video data D1, for example. The editing processing is processing to edit the video indicated by the video data D1. Specifically, the editing processing includes processing to add various imagery to the imagery indicated by the video data D1. For example, videos obtained by a capturing device capturing each player P, imagery for demonstration, or imagery for decoration is added through the editing processing. The conversion processing is processing to convert a data format. For example, an example of conversion processing is compression processing to convert video data D1 having an uncompressed data format into video data D2 having a compressed data format. As will be understood from the above explanation, the data format of the video data D1 is different from the data format of the video data D2. However, the data format of the video data D1 may be the same as the data format of the video data D2. The video data D1 may be compressed data. A configuration in which the video data editor 313 is included in the game system 20 may be assumed.

The status data acquirer 311 acquires the status data X indicative of the status of the baseball game from the game system 20. Specifically, the status data acquirer 311 receives the status data X, which is transmitted from the game system 20, through the communication device 33.

The information generator 312 generates the commentary text C using the status data X acquired by the status data acquirer 311. In addition, the information generator 312 transmits the commentary data Y indicative of the commentary text C from the communication device 33 to the distribution system 40. To generate the commentary text C, the information generator 312 uses setting data Z together with the status data X. The setting data Z is data that specifies a condition (commentary condition) on the commentary text C. The setting data processor 314 in Fig. 7 generates the setting data Z. In other words, the setting data Z generated by the setting data processor 314 is stored in the storage device 32 and the setting data Z is used to generate the commentary text C by the information generator 312. As shown in Fig. 7, the setting data Z in the first embodiment includes supplementary data Q and reference data R.

The supplementary data Q is a data table in which information used for the commentary text C is registered. Specifically, the supplementary data Q includes information that is not used in the game system 20 (hereinafter, referred to as "supplementary information"). The supplementary information, which is information that is not used to control the baseball game, may be referred to as information that is not stored in the storage device 22 or as information that is not displayed on the play imagery.

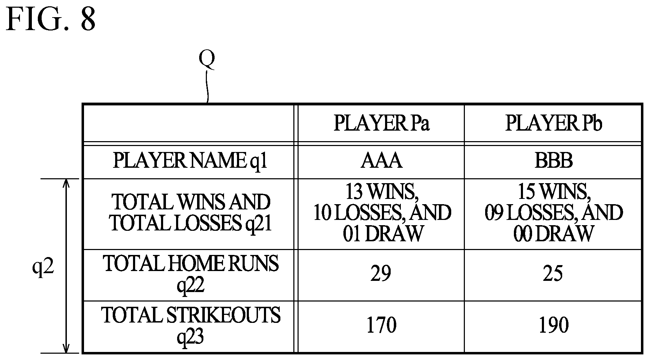

Fig. 8 is a schematic diagram showing specific contents of the supplementary data Q. As shown in Fig. 8, the supplementary data Q is data in which a player name q1 and a total record q2 are registered for each of the player Pa and the player Pb.

The player name q1 is a name individually set for each player P. In the game system 20, each player P is identified by generic identification information, such as "Player 1" and "Player 2" (i.e., information shared by a plurality of players P), and the name individually set for each player P is not used. Thus, the player name q1 registered in the supplementary data Q is the supplementary information that is not used in the game system 20.

The total record q2 is a total record in previous plural matches played by each player P. Specifically, the total record q2 includes total wins and total losses q21, total home runs q22, and total strikeouts q23. The total wins and total losses q21 includes the number of wins, the number of losses, and the number of draws in the previous plural matches for each player P. The total home runs q22 is a numerical value obtained by summing up the number of home runs in the previous plural matches for each player P. The total strikeouts q23 is a numerical value obtained by summing up the number of grabbing strikeouts in the previous plural matches for each player P. In the game system 20, a record of each player P in the baseball game is initialized for each match, and the total record in plural matches is not used. Accordingly, the total record q2 (q21 to q23) registered in the supplementary data Q is the supplementary information that is not used in the game system 20.

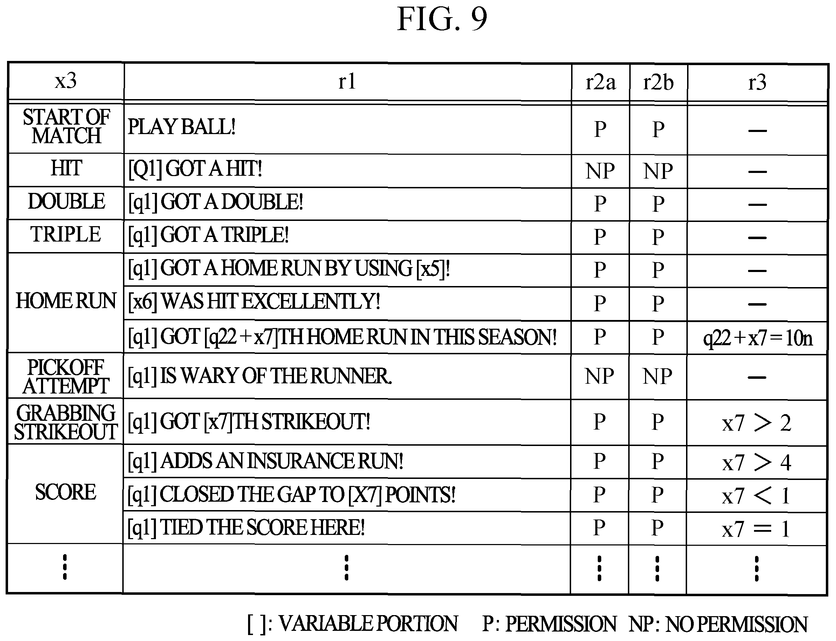

The reference data R is a data table in which the information used for the commentary text C and a condition for generating the commentary text C are registered. Fig. 9 is a schematic diagram showing specific contents of the reference data R. As shown in Fig. 9, the reference data R is the data table in which a plurality of pieces of registered text r1 is registered. Each of the pieces of registered text r1 corresponds to one of the event types x3. One or more pieces of registered text r1 are registered for one event type x3. In other words, one piece of registered text r1 may be registered for one event type x3, or alternatively, a plurality of pieces of registered text r1 may be registered for one event type x3 in duplicate.

Each of the pieces of registered text r1 is text that constitutes part or all of the commentary text C. Specifically, the registered text r1 is text that includes one or more words, one or more sentences, or a combination thereof. The information generator 312 generates the commentary text C by using one or more pieces of registered text (hereinafter, referred to as "selected registered text") r1 selected from among the plurality of pieces of registered text r1 in accordance with the status data X. The one or more pieces of selected registered text r1 are one or more pieces of registered text r1, which correspond to the event type x3 indicated by the status data X, among the plurality of pieces of registered text r1. In other words, the registered text r1 corresponding to the event type x3 of the most recently event in the baseball game is selected as the selected registered text r1 for generation of the commentary text C.

Among the plurality of pieces of registered text r1, there is a piece of registered text r1 that includes one or more variable portions. The variable portion is a portion of the registered text r1, and variable information on the status of the baseball game is to be inserted into the variable portion. The information generator 312 generates the commentary text C by inserting information into the variable portion of the selected registered text r1. By changing the information that is to be inserted into the variable portion, different pieces of commentary text C are generated from one piece of registered text r1. In other words, the registered text r1 is fixed text that is shared between different pieces of commentary text C. Among the plurality of pieces of registered text r1 in the reference data R, there is a piece of registered text r1 that includes no variable portions.

Regarding the variable portion of each of the pieces of registered text r1, information that is to be inserted into the variable portion is specified. Specifically, a piece of information among plural pieces of information that include pieces of information (x3 to x7) in the status data X and pieces of information (q1, q2) in the supplementary data Q is specified for each variable portion. The information generator 312 generates the commentary text C by inserting the information, which is specified for the variable portion of the selected registered text r1, into the variable portion of the selected registered text r1. The information (q1, q2) included in the supplementary data Q is the supplementary information as described above. Accordingly, the commentary text C indicated by the commentary data Y may include the supplementary information.

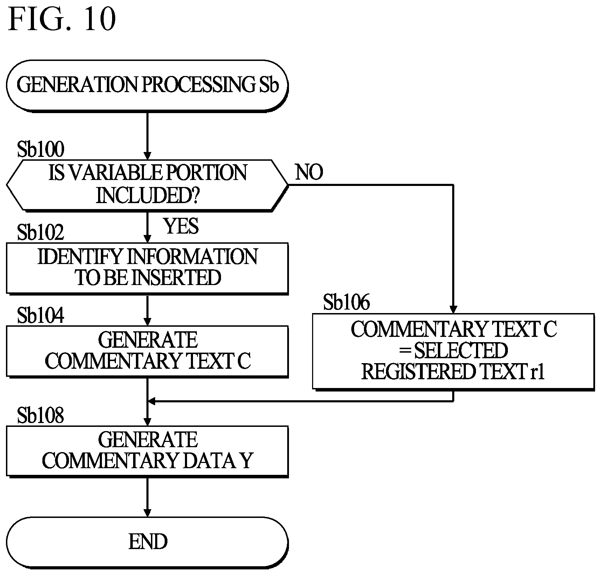

Fig. 10 is a flow chart showing a specific procedure of processing (hereinafter, referred to as "generation processing") Sb in which the information generator 312 generates the commentary text C using the selected registered text r1.

When the generation processing Sb starts, the information generator 312 determines whether the selected registered text r1 includes a variable portion (Sb100). In response to the selected registered text r1 including a variable portion (Sb100: YES), the information that is to be inserted into the variable portion is identified from the status data X or from the supplementary data Q (Sb102). Specifically, from among the plural pieces of information that include the pieces of information (x3 to x7) in the status data X and the pieces of information (q1, q2) in the supplementary data Q, information specified for the variable portion is identified. The information generator 312 generates the commentary text C by inserting the information into the variable portion of the selected registered text r1 (Sb104). On the other hand, in response to the selected registered text r1 including no variable portion (Sb100: NO), the information generator 312 determines the selected registered text r1 as the commentary text C (Sb106). The information generator 312 generates the commentary data Y indicative of the commentary text C that is determined through the procedure (Sb104, Sb106) described above (Sb108).

For example, it is assumed that the status data acquirer 311 acquires the status data X[3] in Fig. 5. The selected registered text r1 is a piece of registered text r1 "[q1] got a double! ", which corresponds to the event type x3 "double" of the status data X[3], among the plurality of pieces of registered text r1 of the reference data R. The selected registered text r1 includes a variable portion for which the player name q1 of the supplementary data Q is specified. The target player x4 indicated by the status data X[3] is the player Pa; accordingly, the information generator 312 generates the commentary text C "AAA got a double!" by inserting the player name q1 "AAA", which is indicated for the player Pa by the supplementary data Q, into the variable portion.

It is assumed that the status data acquirer 311 acquires the status data X[7] in Fig. 5. The selected registered text r1 is a piece of registered text r1 "[q1] got [x7]th strikeout!", which corresponds to the event type x3 "grabbing strikeout" of the status data X[7], among the plurality of pieces of registered text r1 of the reference data R. The selected registered text r1 includes a variable portion, for which the player name q1 is specified, and a variable portion, for which the control information x7 is specified. The target player x4 indicated by the status data X[7] is the player Pb; accordingly, the information generator 312 generates the commentary text C "BBB got 3th strikeout!" not only by inserting the player name q1 "BBB", which is indicated for the player Pb by the supplementary data Q, into the first variable portion, but also by inserting the control information x7 "3" of the status data X[7] into the second variable portion.

In Fig. 9, a piece of registered text r1 corresponding to the event type x3 "home run" is "[q1] got [q22 + x7]th home run in this season!". The sum of the total home runs q22 indicated by the supplementary data Q and the numerical value indicated by the control information x7 of the status data X is inserted into the second variable portion of the registered text r1. For example, when the total home runs q22 indicates "29" and the control information x7 indicates "1" (q22 + x7 = 30), the commentary text C "AAA got 30th home run in this season!" is generated as shown in Fig. 2. As shown above, the information generator 312 may generate information (including the supplementary information), which is to be inserted into an inserted portion, by using a combination of two or more pieces of information among the plural pieces of information that includes the pieces of information (x3 to x7) in the status data X and the pieces of information (q1, q2) in the supplementary data Q.

As shown in Fig. 9, the reference data R includes permission data r2 (r2a, r2b) for each of the pieces of registered text r1. The permission data r2 corresponding to a piece of registered text r1 is data indicative of permission (P: permission) or prohibition (NP: no permission) of generation of the commentary text C including the piece of registered text r1. The permission data r2 is set for each player P. Specifically, the permission data r2a is data on the player Pa, whereas the permission data r2b is data on the player Pb. For example, when the permission data r2a corresponding to a piece of registered text r1 indicates permission, the information generator 312 generates the commentary text C, which corresponds to the player Pa, from the piece of registered text r1. On the other hand, when the permission data r2a indicates no permission, the information generator 312 does not generate commentary text C including the piece of registered text r1. This similarly applies to the permission data r2b. The permission data r2 may be omitted from the reference data R.

As shown in Fig. 9, the reference data R includes condition data r3 for one or more pieces of registered text r1 among the plurality of pieces of registered text r1. The condition data r3 corresponding to a piece of registered text r1 is data indicative of a condition (hereinafter, referred to as a "generation condition") for generating the commentary text C including the piece of registered text r1. Specifically, the generation condition indicated by the condition data r3 is a condition related to the current status of the baseball game. For example, for the registered text r1 "[q1] got [total home runs q22 + control information x7]th home run in this season!", a generation condition is registered in which the sum of the total home runs q22 and the numerical value of the control information x7 is a multiple of 10 (q22 + x7 = 10n, where n is a natural number). The information generator 312 generates the commentary text C including the registered text r1 when the generation condition indicated by the condition data r3 is satisfied, whereas the information generator 312 does not generate the commentary text C including the registered text r1 when the generation condition is not satisfied. The plurality of pieces of registered text r1 includes a piece of registered text r1, for which condition data r3 is registered, and a piece of registered text r1, for which condition data r3 is not registered. Regarding the piece of registered text r1 for which condition data r3 is not registered, the commentary text C is generated only on the condition that the permission data r2 indicates permission. The condition data r3 may be omitted from the reference data R.

As will be understood from the above examples, the player name q1 and the total record q2 of the supplementary data Q and the registered text r1 of the reference data R are data indicative of conditions for the contents of commentary text C. On the other hand, the permission data r2 and the condition data r3 of the reference data R are data indicative of conditions for generation of commentary text C. Accordingly, the setting data Z including the supplementary data Q and the reference data R is referred to as data for setting a condition (a condition for the contents or generation) for commentary text C.

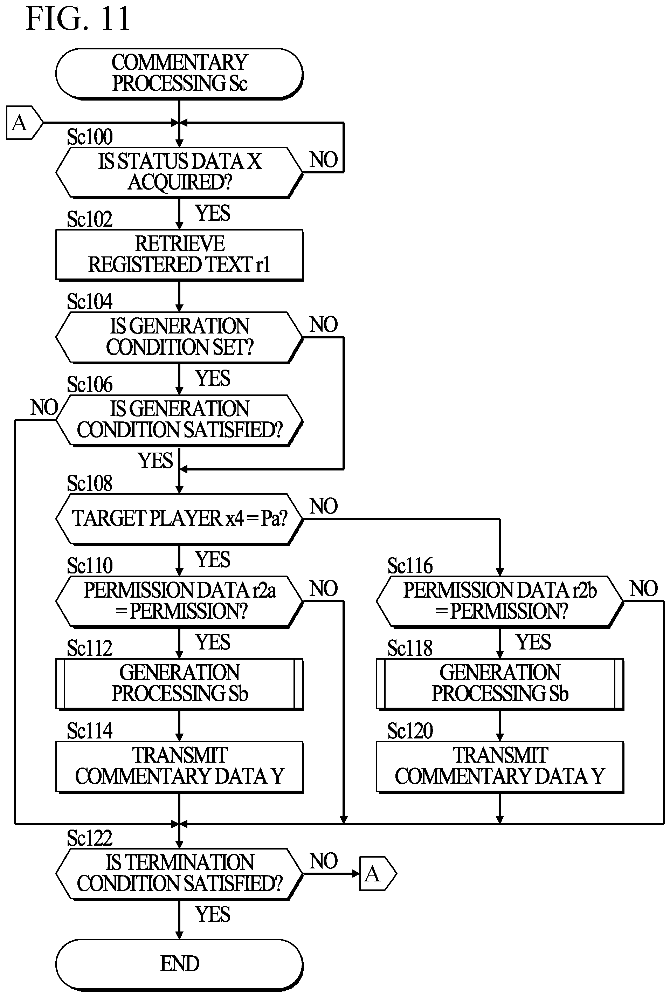

Fig. 11 is a flow chart showing a specific procedure of processing (hereinafter referred to as "commentary processing") Sc in which the controller 31 of the control system 30 generates the commentary data Y. The commentary processing Sc, which starts in response to an instruction from the administrator Op1 to the operation device 34, continues in parallel with the progress of the baseball game. The commentary processing Sc is an example of an "information processing method."

When the commentary processing Sc starts, the status data acquirer 311 waits until the status data X is acquired from the game system 20 (Sc100: NO). In response to the status data acquirer 311 acquiring the status data X (Sc100: YES), the information generator 312 retrieves a piece of selected registered text r1, which corresponds to the status indicated by the status data X, from among the plurality of pieces of registered text r1 registered in the reference data R (Sc102). Specifically, the information generator 312 retrieves a piece of registered text r1, which corresponds to the event type x3 of the status data X, from the reference data R.

The information generator 312 determines whether the condition data r3 is registered for the piece of selected registered text r1 (Sc104). In other words, it is determined whether the generation condition is set for the commentary text C including the piece of selected registered text r1. In response to the condition data r3 being registered (Sc104: YES), the information generator 312 determines whether the generation condition indicated by the condition data r3 is satisfied (Sc106). In response to the generation condition not being satisfied (Sc106: NO), the information generator 312 returns the processing to step Sc122 described below. On the other hand, in response to the condition data r3 not being registered (Sc104: NO) or in response to the generation condition being satisfied (Sc106: YES), the information generator 312 executes processing (Sc108 to Sc120) to generate the commentary text C including the piece of selected registered text r1. In other words, regarding the selected registered text r1 for which the generation condition is set, the information generator 312 generates the commentary text C including the selected registered text r1 when the generation condition is satisfied.

The information generator 312 determines whether the target player x4 included in the status data X is the player Pa (Sc108). In response to the target player x4 being the player Pa (Sc108: YES), the information generator 312 determines whether the permission data r2a corresponding to the piece of selected registered text r1 indicates permission (Sc110). In response to the permission data r2a of the player Pa indicating permission (Sc110: YES), the information generator 312 generates the commentary data Y of the commentary text C including the piece of selected registered text r1 through the generation processing Sb described above (Sc112). In other words, the commentary text C, which includes the registered text r1 corresponding to the event indicated by the status data X, is generated. The information generator 312 transmits the commentary data Y from the communication device 33 to the distribution system 40 (Sc114). On the other hand, in response to the permission data r2a indicating no permission (Sc110: NO), the information generator 312 executes neither generation (Sc112) nor transmission (Sc114) of the commentary data Y.

In response to the target player x4 being the player Pb (Sc108: NO), the information generator 312 determines whether the permission data r2b corresponding to the piece of selected registered text r1 indicates permission (Sc116). In response to the permission data r2b of the player Pb indicating permission (Sc116: YES), the information generator 312 generates the commentary data Y of the commentary text C including the piece of selected registered text r1 through the generation processing Sb described above (Sc118). The information generator 312 transmits the commentary data Y from the communication device 33 to the distribution system 40 (Sc120). On the other hand, in response to the permission data r2b indicating no permission (Sc116: NO), the information generator 312 executes neither generation (Sc118) nor transmission (Sc120) of the commentary data Y.

In response to executing the processing described above, the controller 31 determines whether a predetermined termination condition is satisfied (Sc122). The termination condition is, for example, an instruction of termination from the administrator Op1 to the operation device 34, or a notice of the termination of the baseball game from the game system 20. In response to the termination condition not being satisfied (Sc122: NO), the controller 31 returns the processing to step Sc100. In other words, the processing is returned to a state in which the status data acquirer 311 waits for acquisition of the status data X. On the other hand, in response to the termination condition being satisfied (Sc122: YES), the controller 31 terminates the commentary processing Sc. The specific embodiment of the commentary processing Sc is described above.

The game server 50 in Fig. 1 is a server system configured to manage game data for each of the players P registered in advance. The game data for the respective players P is a record of play of the baseball game regarding the respective players P. Specifically, in the game data for each of the players P, the player name of the player P and the past record of the player P (the number of wins, the number of losses, the number of home runs, the number of grabbing strikeouts, the number of strikeouts, etc.) are registered.

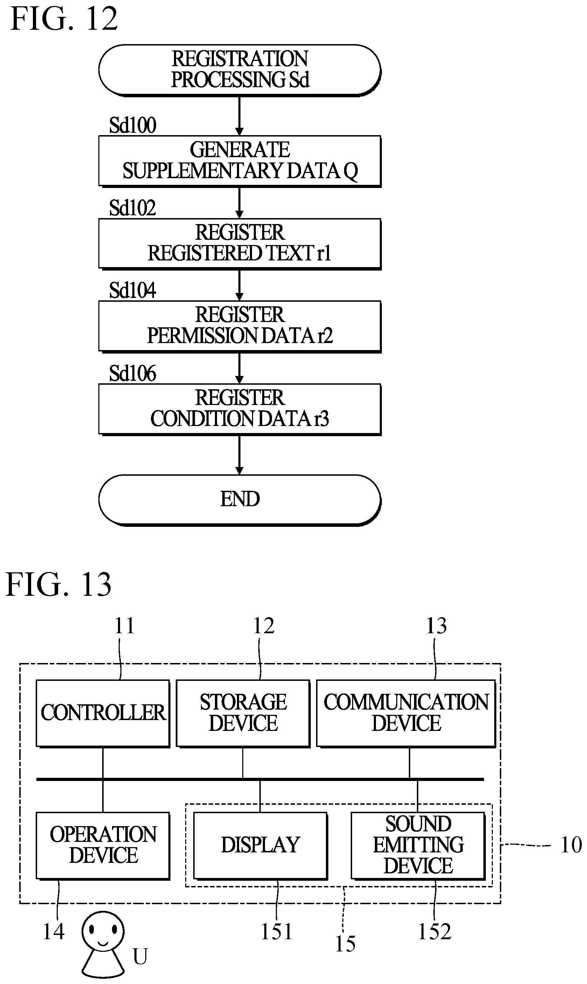

The setting data processor 314 in Fig. 7 generates the setting data Z that is used in the commentary processing Sc. Fig. 12 is a flow chart showing a specific procedure of processing (hereinafter, referred to as "registration processing") Sd in which the setting data processor 314 generates the setting data Z. Prior to the beginning of a competition event, the registration processing Sd is executed in response to an instruction from the administrator Op1 to the operation device 34. The registration processing Sd is executed for each competition event or for each match of the baseball game in a competition event. The registration processing Sd may be executed for each distribution of a series of game videos G (for example, for each program).

When the registration processing Sd starts, the setting data processor 314 generates the supplementary data Q of the setting data Z (Sd100). Specifically, the setting data processor 314 generates the supplementary data Q on a match between the player Pa and the player Pb by referring to the game data managed for each of the player Pa and the player Pb by the game server 50. For example, the setting data processor 314 acquires the player name registered in the game data as the player name q1 of the supplementary data Q. In addition, the setting data processor 314 sums the records registered in the game data (the number of wins, the number of losses, the number of home runs, and the number of grabbing strikeouts) to calculate the total record q2 of the supplementary data Q (the total wins and total losses q21, the total home runs q22, and the total strikeouts q23), for example. The setting data processor 314 may set the respective elements (q1, q2) of the supplementary data Q in accordance with an instruction from the administrator Op1 to the operation device 34.

The setting data processor 314 generates the reference data R in accordance with an instruction from the administrator Op1 to the operation device 34 (Sd102 to Sd106). The order of the generation of the supplementary data Q (Sd100) and the generation of reference data R (Sd102 to Sd106) may be reversed.

The administrator Op1 operates the operation device 34 to indicate freely selected pieces of registered text r1 to the control system 30. The setting data processor 314 registers the pieces of registered text r1, which are indicated by the administrator Op1, in the reference data R (Sd102). Specifically, the setting data processor 314 registers pieces of registered text r1, which are selected from among a plurality of previously prepared pieces of registered text r1 by the administrator Op1, or pieces of registered text r1, which are directly entered by the administrator Op1 using the operation device 34, in the reference data R. The setting data processor 314 may change the contents of an existing piece of registered text r1 in accordance with an instruction from the administrator Op1.

The administrator Op1 indicates the pieces of registered text r1, for example, in accordance with various circumstances such as deployments expected for the baseball game or a tendency of the user U to watch the distributed video V. For example, if a pitching duel is expected due to great pitching made by pitchers of both teams, a number of pieces of registered text r1 regarding pitching such as a pitch type are registered in the reference data R. For example, if a slugfest in which a large number of runs are scored is expected due to activity of batters of both teams, a number of pieces of registered text r1 regarding batting such as the number of home runs or a batting average are registered in the reference data R. If many users U that have mastered the baseball game is expected to watch, a number of pieces of registered text r1 regarding the baseball game such as a batting average of each character in the baseball game or on-base percentage of each character are registered in the reference data R. As will be understood from the above description, in the first embodiment, the registered text r1 corresponding to an instruction from the administrator Op1 is registered; accordingly, the user U can be provided with the commentary text C having a tendency in accordance with the intention of the administrator Op1.

In addition, the administrator Op1 operates the operation device 34 to enter an instruction, which indicates for each player P whether the commentary text C including a piece of registered text r1 is allowed to be generated, to the control system 30. The setting data processor 314 registers permission data r2 (r2a, r2b), which is set to either permission or no permission in accordance with the instruction from the administrator Op1, in the reference data R (Sd104). For example, it is assumed that a configuration in which the permission data r2 is individually registered for each piece of registered text r1. However, the permission data r2 may be registered collectively for the plurality of pieces of registered text r1. For example, in a configuration in which a plurality of pieces of registered text r1 are classified into plural sets in accordance with the contents of each of the pieces of registered text r1, the setting data processor 314 sets the permission data r2 for each of the plural sets. In other words, a plurality of pieces of permission data r2, which corresponds to different pieces of registered text r1 in a set, is set to the same numerical value in accordance with an instruction on the set from the administrator Op1.

Depending on various circumstances regarding distribution of the distributed video V, a situation is assumed in which a commentary on the player Pa should have priority over a commentary on the player Pb. In this situation, the administrator Op1 sets permission of generation of commentary text C to a large number of pieces of registered text r1 for the player Pa, and the administrator Op1 sets no permission of generation of commentary text C to a large number of piece of registered text r1 for the player Pb. Accordingly, the setting data processor 314 sets the permission data r2 in accordance with an instruction from the administrator Op1 so that the ratio of the pieces of permission data r2a indicative of permission exceeds the ratio of the pieces of permission data r2b indicative of permission. In other words, the commentary text C on the player Pa is generated at a higher frequency compared to the commentary text C on the player Pb. A situation may be assumed in which the commentary text C on the player Pa should be generated at the same frequency as the commentary text C on the player Pb. In this situation, the setting data processor 314 sets the permission data r2a and the permission data r2b, which correspond to a piece of registered text r1, to the same numerical value in accordance with an instruction from the administrator Op1. Accordingly, the commentary text C on the player Pa and the commentary text C on the player Pb are generated at substantially the same frequency. As will be understood from the above description, in the first embodiment, it is possible to adjust the frequency, at which the commentary text C on the player Pa is generated, and the frequency, at which the commentary text C on the player Pb is generated, in accordance with the intention of the administrator Op1.

In addition, the administrator Op1 operates the operation device 34 to enter an instruction, which indicates a generation condition for a desired piece of registered text r1 among the plurality of pieces of registered text r1, to the control system 30. The setting data processor 314 registers the condition data r3, which indicates the generation condition indicated by the administrator Op1 for the piece of registered text r1 indicated by the administrator Op1, in the reference data R (Sd106). Specifically, the setting data processor 314 registers condition data r3, which indicates a generation condition selected from among a plurality of previously prepared generation conditions by the administrator Op1, or condition data r3, which indicates a generation condition directly entered by the administrator Op1 using the operation device 34, in the reference data R. In addition, the setting data processor 314 may change the contents of a generation condition indicated by existing condition data r3 in accordance with an instruction from the administrator Op1. The reference data R generated through the registration processing Sd described above is stored in the storage device 32 and is used in the commentary processing Sc described above.

The distribution system 40 in Fig. 1 is, for example, a computer system operated by a provider of a video distribution site. The distribution system 40 receives the commentary data Y and the video data D2 transmitted from the control system 30. The distribution system 40 transmits the commentary data Y and the video data D2 to the terminal apparatus 10. For example, the distribution system 40 transmits the commentary data Y and the video data D2 to a delivery destination that is either a terminal apparatus 10, which has transmitted a delivery request to the distribution system 40, or a terminal apparatus 10, which has been registered in the distribution system 40.

Fig. 13 is a block diagram showing a configuration of the terminal apparatus 10. As shown in Fig. 13, the terminal apparatus 10 includes a controller 11, a storage device 12, a communication device 13, an operation device 14, and a play device 15. The terminal apparatus 10 may be a single device, but may also be a set of a plurality of devices separate from each other.

The controller 11 is constituted by one or more processors configured to control each of the elements of the terminal apparatus 10, for example. Specifically, the controller 11 is constituted by one or more types of processors such as a CPU, a GPU, a DSP, an FPGA, or an ASIC.

The storage device 12 is one or more memories configured to store a program executed by the controller 11 and various data used by the controller 11. For example, a known recording medium such as a semiconductor recording medium and a magnetic recording medium, or a combination of different types of recording mediums, may be used as the storage device 12.

The communication device 13 communicates with the distribution system 40 via the communication network 2. Specifically, the communication device 13 receives the commentary data Y and the video data D2 from the distribution system 40. The operation device 14 is an input device configured to receive operations made by the user U. For example, the operation device 14 is an operation element operable by the user U, or a touch panel to detect contact made by the user U.

The play device 15 plays the distributed video V under the control of the controller 11. The play device 15 includes a display 151 and a sound emitting device 152. The display 151 displays imagery under the control of the controller 11. Specifically, the controller 11 causes the display 151 to display the distributed video V, which includes the game video G indicated by the video data D2 and the commentary text C indicated by the commentary data Y, in Fig. 2. More specifically, a plurality of pieces of commentary text C corresponding to different events are displayed in the commentary area Va of the distributed video V in chronological order. In other words, in addition to the commentary text C corresponding to the most recent event, the commentary text C corresponding to the past event is displayed in the commentary area Va. The sound emitting device 152 emits audio sounds under the control of the controller 11. Specifically, the sound emitting device 152 emits audio sounds for the game video G indicated by the video data D2. The function in which the controller 11 causes the play device 15 to play the distributed video V may be implemented by a general-purpose browser or may be implemented by a dedicated application program. While understanding the progress of the game by viewing the game video G, the user U of the terminal apparatus 10 can confirm detailed information on the status of the progress by referring to each of the pieces of commentary text C.

As described above, in the first embodiment, the commentary text C on the status of the baseball game is automatically generated not only by use of the status data X indicative of the status of the baseball game, but also by use of the setting data Z specifying the condition for the commentary text C, and the commentary text C is played together with the game video G. Thus, for example, it is possible to reduce a load of the administrator Op1 for generating the commentary text C compared to a configuration in which the administrator Op1 enters respective pieces of commentary text C by manually operating the operation device 34 at appropriate points in time during the progress of the baseball game.

In particular, the commentary text C including the supplementary information that is not used in the game system 20 is generated in the first embodiment; accordingly, it is possible to provide the user U of the terminal apparatus 10 with the commentary text C having rich content and much information compared to a configuration that generates commentary text C from only the status data X. For example, the commentary text C is provided which includes the player name q1 of each player P and the total record q2 in plural matches. In the first embodiment, the terminal apparatus 10 plays the commentary text C that includes a piece of registered text r1, which corresponds to the event that occurs in the baseball game, among the plurality of pieces of registered text r1. Accordingly, the user U of the terminal apparatus 10 can easily understand the event that occurs in the baseball game.

In addition, the commentary text C including a piece of registered text r1 is generated when the generation condition corresponding to the piece of registered text r1 is satisfied. In other words, regarding a predetermined piece of registered text r1, commentary text C is not generated when only an event corresponding to the piece of registered text r1 occurs, but the commentary text C is generated when the generation condition is further satisfied. Accordingly, it is possible to generate the commentary text C including the predetermined piece of registered text r1 in only a predetermined circumstance. Additionally, in the first embodiment, permission or no permission of generation of the commentary text C including a piece of registered text r1 is set for each player P; accordingly, it is possible to provide the user U of the terminal apparatus 10 with the commentary text C having suitable contents for each player P.

### Second Embodiment

A second embodiment of the present invention will be described. In the embodiments shown in the following, elements having the same functions as in the first embodiment are denoted by the same reference numerals as used for like elements in the description of the first embodiment, and detailed description thereof is omitted, as appropriate.

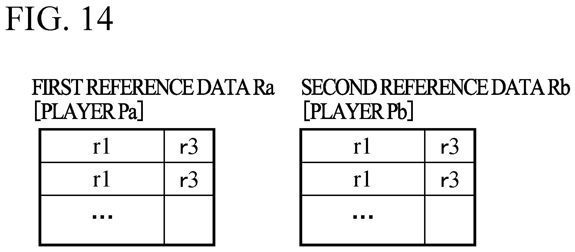

The setting data Z in the second embodiment includes first reference data Ra and second reference data Rb in Fig. 14, instead of the reference data R in the first embodiment. The first reference data Ra is a data table that is used to generate the commentary text C on the player Pa, whereas the second reference data Rb is a data table that is used to generate the commentary text C on the player Pb. In other words, the reference data R includes the first reference data Ra and the second reference data Rb. The contents of the supplementary data Q of the setting data Z is the same as that of the first embodiment.

A plurality of pieces of registered text r1 is registered in the first reference data Ra. Each of the plurality of pieces of registered text r1 corresponds to one of the event types x3. Each of the pieces of registered text r1 in the first reference data Ra is used to generate the commentary text C on the player Pa. Similarly, a plurality of pieces of registered text r1 is registered in the second reference data Rb. Each of the plurality of pieces of registered text r1 corresponds to one of the event types x3. Each of the pieces of registered text r1 in the second reference data Rb is used to generate the commentary text C on the player Pb. The pieces of registered text r1 in the first reference data Ra and the pieces of registered text r1 in the second reference data Rb are set separately. Thus, the first reference data Ra and the second reference data Rb are differ from each other in the number of pieces of registered text r1 and in the contents of pieces of registered text r1. Accordingly, the commentary text C on the player Pa and the commentary text C on the player Pb, which differ from each other, are generated.

The administrator Op1 operates the operation device 34 to enter an instruction, which indicates the plurality of pieces of registered text r1 that is used to generate the commentary text C on the player Pa, and an instruction, which indicates the plurality of pieces of registered text r1 that is used to generate the commentary text C on the player Pb, separately. The setting data processor 314 registers the plurality of pieces of registered text r1, which is indicated for the player Pa by the administrator Op1, in the first reference data Ra, and the setting data processor 314 registers the plurality of pieces of registered text r1, which is indicated for the player Pb by the administrator Op1, in the second reference data Rb. In other words, the respective pieces of registered text r1 in the first reference data Ra are information, which is permitted to be used to generate the commentary text C on the player Pa by the administrator Op1, whereas the respective pieces of registered text r1 in the second reference data Rb are information, which is permitted to be used to generate the commentary text C on the player Pb by the administrator Op1. Accordingly, the reference data R in the second embodiment does not include the permission data r2 (r2a, r2b) shown in the first embodiment.

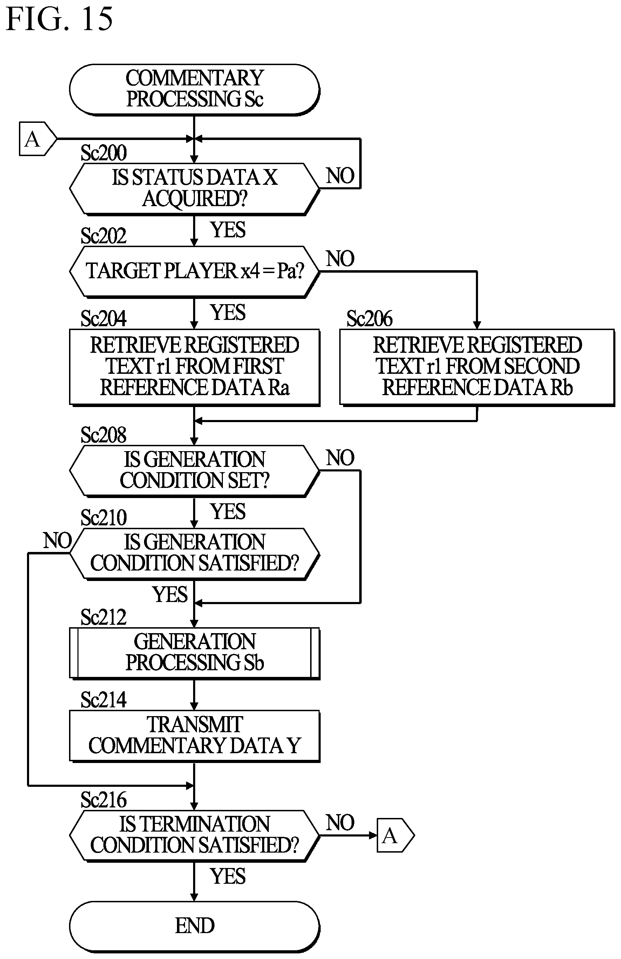

Fig. 15 is a flow chart showing a specific procedure of the commentary processing Sc according to the second embodiment. As in the first embodiment, the commentary processing Sc, which starts in response to an instruction from the administrator Op1 to the operation device 34, continues in parallel with the progress of the baseball game.

When the commentary processing Sc starts, the status data acquirer 311 waits until the status data X is acquired from the game system 20 (Sc200: NO). In response to the status data acquirer 311 acquiring the status data X (Sc200: YES), the information generator 312 determines whether the target player x4 included in the status data X is the player Pa (Sc202).

In response to the target player x4 being the player Pa (Sc202: YES), the information generator 312 retrieves a piece of selected registered text r1, which corresponds to the status indicated by the status data X, from among the plurality of pieces of registered text r1 registered in the first reference data Ra (Sc204). On the other hand, in response to the target player x4 being the player Pb (Sc202: NO), the information generator 312 retrieves a piece of selected registered text r1, which corresponds to the status indicated by the status data X, from among the plurality of pieces of registered text r1 registered in the second reference data Rb (Sc206).

The information generator 312 determines whether the condition data r3 is registered for the piece of selected registered text r1 (Sc208). In response to the condition data r3 being registered (Sc208: YES), the information generator 312 determines whether the generation condition indicated by the condition data r3 is satisfied (Sc210). In response to the condition data r3 not being registered (Sc208: NO) or in response to the generation condition being satisfied (Sc210: YES), the information generator 312 generates the commentary data Y of the commentary text C including the piece of selected registered text r1 through the generation processing Sb (Sc212). The information generator 312 transmits the commentary data Y from the communication device 33 to the distribution system 40 (Sc214). On the other hand, in response to the generation condition not being satisfied (Sc210: NO), the information generator 312 executes neither generation (Sc212) nor transmission (Sc214) of the commentary data Y.

The controller 31 repeats processing (Sc200 to Sc214) described above until a predetermined termination condition is satisfied (Sc216: NO). In response to the termination condition being satisfied (Sc216: YES), the controller 31 terminates the commentary processing Sc.

In the second embodiment, the same effects as in the first embodiment are provided. Additionally, in the second embodiment, the commentary text C on the player Pa includes the registered text r1 in the first reference data Ra, whereas the commentary text C on the player Pb includes the registered text r1 in the second reference data Rb. Therefore, it is possible to provide the user U of the terminal apparatus 10 with the commentary text C having suitable contents for each player P.

### Third Embodiment

In the first embodiment, a configuration is described in which the game system 20 transmits the status data X to the control system 30 for all of the events that occurs in the baseball game. In a third embodiment, when an event occurs that satisfies a specific condition (hereinafter, referred to as a "transmission condition") among a plurality of events that may occur in the baseball game, the status data X indicative of the event is transmitted from the game system 20 to the control system 30.

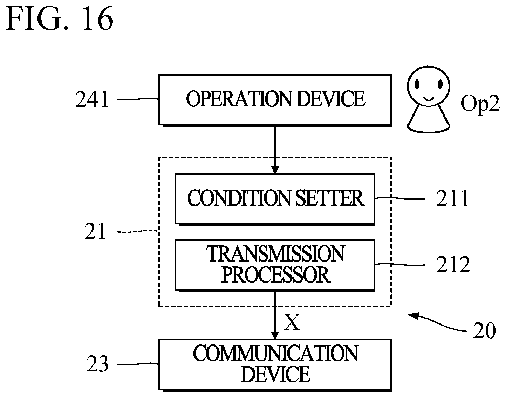

Fig. 16 is a block diagram showing a functional configuration of the game system 20 according to the third embodiment. As shown in Fig. 16, the controller 21 of the game system 20 executes the program stored in the storage device 22 to implement a plurality of functions (a condition setter 211 and a transmission processor 212). The condition setter 211 is an example of a "first condition setter."

The condition setter 211 sets the transmission condition. The transmission condition is a condition for an event for which the status data X should be transmitted. For example, one or more event types x3 are set as transmission conditions. The condition setter 211 sets the transmission condition in accordance with an instruction from an administrator Op2 to the operation device 241. The administrator Op2, who is an operator that manages and operates the game system 20, is in a venue at which a competition event is held, for example. In response to the administrator Op2 entering an instruction indicative of one or more desired event types x3, the condition setter 211 sets the transmission condition including the one or more event types x3 indicated by the administrator Op2.

The condition setter 211 may set the transmission condition in accordance with an instruction from the administrator Op1 to the operation device 34 of the control system 30. For example, the instruction from the administrator Op1 is notified from the control system 30 to the game system 20, and the condition setter 211 sets the transmission condition in accordance with the instruction notified from the control system 30.

A plurality of event types x3 may be collectively set as a transmission condition. For example, in a configuration in which a plurality of event types x3 are classified into plural sets, the condition setter 211 collectively sets one or more event types x3 belonging to a set selected by the administrator Op2 as a transmission condition. For example, the plurality of event types x3 are classified into an event on the offense and an event on the defense. The event on the offense is, for example, "hit," "home run," "base stealing," "score," or "batter change," whereas the event on the defense is, for example, "grabbing strikeout," "pickoff attempt," "catch a fly," or "pitcher change." When the administrator Op2 selects the event on the offense, the condition setter 211 collectively sets a plurality of event types x3 for the offense such as "hit," "home run," "base stealing," "score," and "batter change" as a transmission condition. On the other hand, when the administrator Op2 selects the event on the defense, the condition setter 211 collectively sets a plurality of event types x3 for the defense such as "grabbing strikeout," "pickoff attempt," "catch a fly," and "pitcher change" as a transmission condition.

When an event that satisfies the transmission condition set by the condition setter 211 occurs in the baseball game, the transmission processor 212 in Fig. 16 transmits the status data X indicative of the event from the communication device 23 to the control system 30. The contents of the status data X are similar to that of the status data X in the first embodiment.

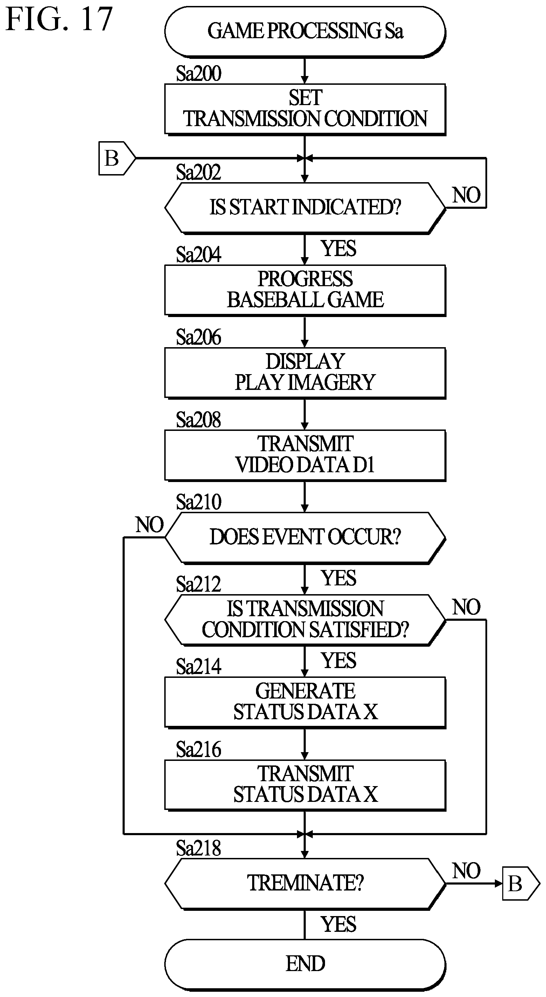

Fig. 17 is a flow chart showing a specific procedure of the game processing Sa according to the third embodiment. For example, the game processing Sa starts in response to an instruction from the administrator Op2 to the operation device 241.

When the game processing Sa starts, the controller 21 (condition setter 211) sets a transmission condition in accordance with an instruction from the administrator Op2 to the operation device 241 (Sa200). In response to the transmission condition being set, the controller 21 waits until the starting of the baseball game is indicated from the administrator Op2 or from a player P (Sa202: NO).

When the starting of the baseball game is indicated (Sa202: YES), the controller 21 progresses the baseball game in accordance with operations made by the respective players P that use the respective operation device 241 (Sa204), and the controller 21 causes each display 242 to display the play imagery (Sa206), as in the first embodiment. As in the first embodiment, the controller 21 transmits the video data D1 indicative of the video corresponding to the current status of the baseball game from the communication device 23 to the control system 30 (Sa208).

The controller 21 determines whether an event occurs during the progress of the baseball game (Sa210). In response to the event occurring (Sa210: YES), the controller 21 (transmission processor 212) determines whether the event satisfies the transmission condition (Sa212). Specifically, the controller 21 determines whether the event type x3 for the current event is included in the transmission condition. In response to the event satisfying the transmission condition (Sa212: YES), the controller 21 generates the status data X on the event (Sa214) to transmit the status data X from the communication device 23 to the control system 30 (Sa216).

In response to no event occurring (Sa210: NO), neither generation (Sa214) nor transmission (Sa216) of status data X is executed. In response to the event occurring (Sa210: YES) in a situation in which the event does not satisfy the transmission condition (Sa212: NO), neither generation (Sa214) nor transmission (Sa216) of status data X is executed. As will be understood from the above description, when an event satisfying the transmission condition occurs in the baseball game, the transmission processor 212 transmits the status data X of the event to the control system 30.

The controller 21 determines whether the baseball game terminates (Sa218). In response to the baseball game not terminating (Sa218: NO), the controller 21 returns the processing to step Sa202. On the other hand, in response to the baseball game terminating (Sa218: YES), the controller 21 terminates the game processing Sa. As shown above, in the third embodiment, the video data D1 is transmitted sequentially at predetermined time intervals, while the status data X satisfying the transmission condition is transmitted every time an event occurs.

In the third embodiment, the same effects as in the first embodiment are provided. In the third embodiment, when the event that occurs in the baseball game satisfies the transmission condition, the status data X of the event is transmitted to the control system 30. Thus, it is possible to generate the commentary text C only when an appropriate event occurs which satisfies the transmission condition. In addition, it is possible to reduce the amount of communication between the game system 20 and the control system 30 compared to a configuration in which the status data X is transmitted for all of the events that occurs in the baseball game. The configuration of the second embodiment, which uses the first reference data Ra and the second reference data Rb C to generate the commentary text C, may be applied to the third embodiment.

### Fourth Embodiment

In the first embodiment, the configuration is shown in which all of the pieces of commentary text C generated by the information generator 312 of the control system 30 is displayed on the display 151 of the terminal apparatus 10. In a fourth embodiment, a piece of commentary text C satisfying a specific condition (hereinafter, referred to as a "play condition") among the plurality of pieces of commentary text C generated by the information generator 312 is selectively displayed on the display 151.

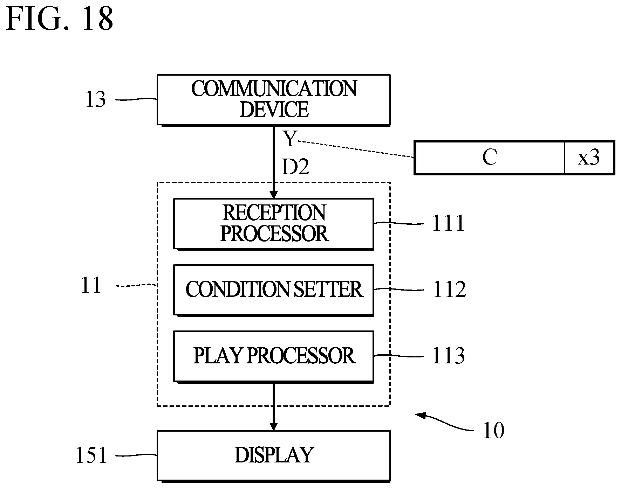

Fig. 18 is a block diagram showing a functional configuration of the terminal apparatus 10 in the fourth embodiment. As shown in Fig. 18, the controller 11 of the terminal apparatus 10 executes the program stored in the storage device 12 to implement a plurality of functions (a reception processor 111, a condition setter 112, and a play processor 113). The condition setter 112 is an example of a second condition setter.

The reception processor 111 receives the commentary data Y and the video data D2, which are transmitted from the distribution system 40, through the communication device 13. In other words, the reception processor 111 is an element configured to receive the commentary text C, which is generated by the information generator 312, from the control system 30. As shown in Fig. 18, the commentary data Y in the fourth embodiment includes not only the commentary text C generated by the information generator 312, but also the event type x3 of an event indicated by the commentary text C. The event type x3 included in the commentary data Y of each event is information included in the status data X of the event.

The condition setter 112 sets the play condition. The play condition is a condition for an event in which a piece of commentary text C should be played. For example, one or more event type x3 are set as the play condition. The condition setter 112 sets the play condition in accordance with an instruction from the user U to the operation device 14. In response to the user U indicating an instruction indicative of one or more desired event types x3, the condition setter 112 sets a play condition that includes the one or more event types x3 indicated by the user U.

Similar to the setting of the transmission condition by the condition setter 211, a plurality of event types x3 may be collectively set as a play condition. For example, in a configuration in which a plurality of event types x3 are classified into plural sets, the condition setter 211 collectively sets one or more event types x3 belonging to a set selected by the user U as a play condition.

The play processor 113 causes the play device 15 to play the distributed video V. The play processor 113 causes the display 151 to display the game video G, which is indicated by the video data D2, and the commentary text C, which is indicated by the commentary data Y. Specifically, the play processor 113 causes the display 151 to display a piece of commentary text C in conjunction with the game video G, the piece of commentary text C satisfying the play condition set by the condition setter 112 among the plurality of pieces of commentary text C received sequentially by the reception processor 111.

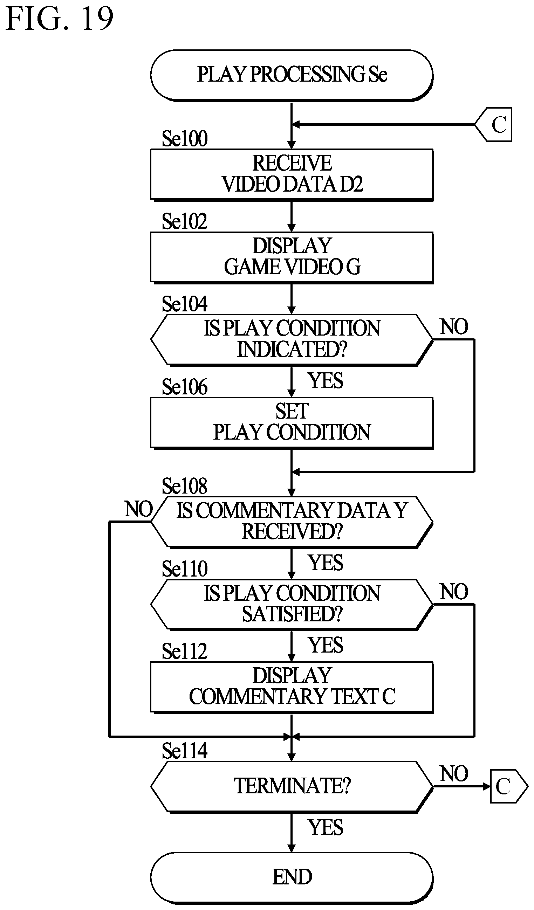

Fig. 19 is a flow chart showing a specific procedure of processing (hereinafter referred to as "play processing") Se executed by the controller 11 of the terminal apparatus 10 in the fourth embodiment. For example, the play processing Se starts in response to an instruction from the user U to the operation device 14. In an initial state immediately after the play processing Se starts, all of the event types x3 (i.e., unconditional) is specified as a play condition.

When the play processing Se starts, the reception processor 111 receives the video data D2 transmitted from the distribution system 40 (Se100). The play processor 113 causes the display 151 to display the game video G indicated by the video data D2 (Se102).

The condition setter 112 determines whether an instruction of the play condition is received from the user U (Se104). In response to the instruction of the play condition being received (Se104: YES), the condition setter 112 sets the play condition in accordance with the instruction from the user U (Se106). On the other hand, in response to the instruction of the play condition not being received (Se104: NO), the setting of the play condition (Se106) is not executed.

The play processor 113 determines whether the reception processor 111 receives the commentary data Y (Se108). In response to the reception processor 111 receiving the commentary data Y (Se108: YES), the play processor 113 determines whether the commentary text C indicated by the commentary data Y satisfies the play condition (Se110). Specifically, the play processor 113 determines whether the event type x3 included in the commentary data Y is included in the play condition. In response to the commentary text C satisfying the play condition (Se110: YES), the play processor 113 causes the display 151 to display the commentary text C indicated by the commentary data Y (Se112). Specifically, the play processor 113 displays the commentary text C received by the reception processor 111 in the commentary area Va of the distributed video V additionally.

In response to the reception processor 111 not receiving the commentary data Y (Se108: NO), neither determination of the play condition (Se110) nor display of the commentary text C (Se112) is executed. In response to the reception processor 111 receiving the commentary data Y (Se108: YES) in a situation in which the commentary text C does not satisfy the play condition (Se110: NO), the display of the commentary text C (Se112) is not executed. In other words, the commentary data Y received by the reception processor 111 is discarded.

The controller 11 determines whether a predetermined termination condition is satisfied (Se114). The termination condition is, for example, an instruction of termination from the user U to the operation device 14, or alternatively, receiving no video data D2 over a predetermined period of time (i.e., termination of the distribution of the video). In response to the termination condition not being satisfied (Se114: NO), the controller 11 returns the processing to step Se100. On the other hand, in response to the termination condition being satisfied (Se114: YES), the controller 11 terminates the play processing Se.

In the fourth embodiment, the same effects as in the first embodiment are provided. In the fourth embodiment, the display 151 of the terminal apparatus 10 displays a piece of commentary text C, which satisfies the play condition, among the plurality of pieces of commentary text C generated by the information generator 312. Accordingly, it is possible to selectively play commentary text C desired by the user U. The configuration of the second embodiment, which uses the first reference data Ra and the second reference data Rb to generate the commentary text C, and the configuration of the third embodiment, which selectively transmits only the status data X of the event satisfying the transmission condition to the control system 30, may be applied to the fourth embodiment.

### Fifth Embodiment

As in the fourth embodiment, the commentary data Y in a fifth embodiment includes the commentary text C generated by the information generator 312 and the event type x3 of the event represented by the commentary text C.

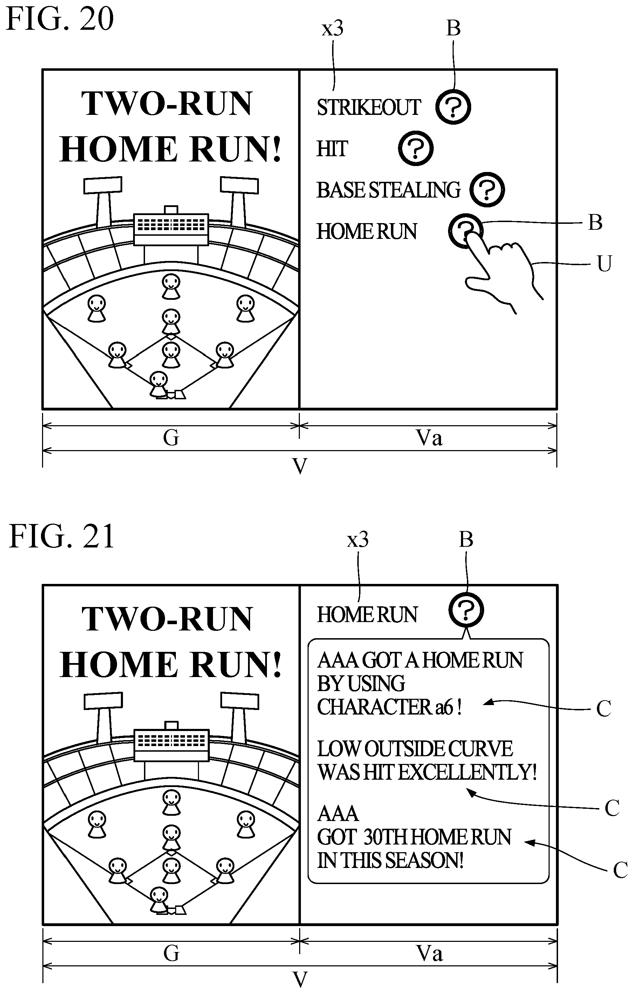

Fig. 20 is a schematic diagram of the distributed video V in the fifth embodiment. The controller 11 in the fifth embodiment displays the event type x3, which is included in the commentary data Y received by the communication device 13, on the commentary area Va of the distributed video V. The display of the event type x3 is added for each reception of the commentary data Y by the communication device 13. In other words, plural event types x3 are displayed in chronological order. The controller 11 displays an operation image B in the commentary area Va for each event type x3. Each of the operation images B is a software button configured to receive operations performed by the user U.

The user U can operate an operation image B, which corresponds to a desired event type x3, among the plural operation images B. In response to receipt of an operation to one of the plural operation images B, the controller 11 displays the commentary text C corresponding to the operation image B in the vicinity of the operation image B. For example, in response to the user U operating the operation image B "home run" in Fig. 20, the commentary text C for "home run" received by the communication device 13 is displayed as shown in Fig. 21. In other words, the display of a summary using the event type x3 is changed into a detailed display using the commentary text C in response to an operation by the user U. The processing described above is executed for each of the plural operation images B.

In the fifth embodiment, the same effects as in the first embodiment are provided. In the fifth embodiment, from among the plurality of pieces of commentary text C generated by the information generator 312, a piece of commentary text C selected by the user U is selectively displayed. Accordingly, compared to a configuration in which all of the pieces of commentary text C is displayed on the commentary area Va, there is an advantage in that it is easy to visually recognize commentary text C desired by the user U. Configurations of the second embodiment to the fourth embodiment may be applied to the fifth embodiment.

### Modifications

Each of the embodiments described above may be variously modified. Examples of specific modifications that may be applied to the above embodiments will be described below. Two or more modifications freely selected from among the following descriptions may be combined as long as no conflict arises from such a combination.

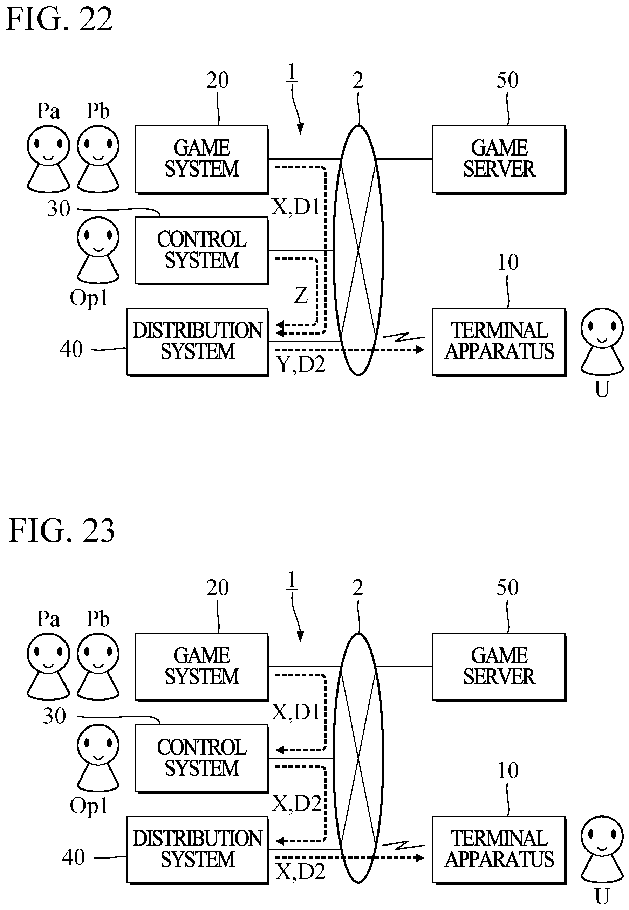

(1) In each of the foregoing embodiments, an example of a configuration is shown in which the video data D2 and the commentary data Y are transmitted to the terminal apparatus 10; however, a configuration that causes the terminal apparatus 10 to display the commentary text C generated by the information generator 312 is not limited to the example described above. For example, the video data editor 313 may generate the distributed video V by combining the commentary text C generated by the information generator 312 with the game video G, and the video data D2 indicative of the distributed video V may be transmitted from the control system 30 to the terminal apparatus 10 via the distribution system 40. In other words, a configuration may be not required in which the commentary data Y indicative of the commentary text C is transmitted to the terminal apparatus 10 as data that is separate from the video data D2. In the above description, the control system 30 combines the commentary text C with the game video G; however, the distribution system 40 may execute processing to combine the commentary text C with the game video G (i.e., processing to generate the distributed video V). For example, as in each of the foregoing embodiments, the control system 30 transmits the commentary data Y and the video data D2 to the distribution system 40. The distribution system 40 generates the distributed video V by combining the commentary text C with the game video G to transmit the video data D2 indicative of the distributed video V to the terminal apparatus 10. The controller 11 of the terminal apparatus 10 causes the play device 15 to play the distributed video V indicated by the video data D2.
(2) One, some, or all of the functions of the control system 30 shown in each of the foregoing embodiments may be included in another element that constitutes the information system 1. Specifically, one, some, or all of the functions of the control system 30 may be included in the distribution system 40. For example, a configuration is assumed in which the control system 30 includes the setting data processor 314 in a situation in which the distribution system 40 includes the status data acquirer 311, the information generator 312, and the video data editor 313. In this configuration, as shown in Fig. 22, the setting data Z generated by the setting data processor 314 of the control system 30 is transferred to the distribution system 40. The distribution system 40 receives the status data X and the video data D1 transmitted by the game system 20. The status data acquirer 311 of the distribution system 40 acquires the status data X, and the information generator 312 generates the commentary data Y from the status data X and the setting data Z. The video data editor 313 of the distribution system 40 generates the video data D2 of the game video G from the video data D1. The commentary data Y and the video data D2 generated by the distribution system 40 are transmitted to the terminal apparatus 10.

In addition, one, some, or all of the functions of the control system 30 shown in each of the foregoing embodiments may be included in the terminal apparatus 10. For example, a configuration is assumed in which the control system 30 includes the setting data processor 314 in a situation in which the terminal apparatus 10 includes the status data acquirer 311 and the information generator 312. The video data editor 313 is included in the control system 30 or the distribution system 40, for example. In this configuration, as shown in Fig. 23, the status data X transmitted from the game system 20 is transmitted to the terminal apparatus 10 via the control system 30 and via the distribution system 40. The status data X may be directly transmitted from the game system 20 to the terminal apparatus 10. The setting data Z generated by the setting data processor 314 of the control system 30 is transferred to the terminal apparatus 10 via the distribution system 40. The setting data Z may be directly transmitted from the control system 30 to the terminal apparatus 10. The status data acquirer 311 of the terminal apparatus 10 acquires the status data X through the communication device 13, and the information generator 312 of the terminal apparatus 10 generates the commentary data Y from the status data X and the setting data Z.

In the present invention, a "control system" is a computer system that includes the status data acquirer 311 and the information generator 312. Accordingly, the concept of the "control system" in the present invention includes not only the control system 30 shown in examples from the first embodiment to the fifth embodiment, but also the distribution system 40 in the configuration of Fig. 22 and the terminal apparatus 10 in the configuration of Fig. 23.

(3) In each of the foregoing embodiments, an example of a configuration is shown in which the commentary data Y transmitted from the control system 30 is transmitted to the terminal apparatus 10 via the distribution system 40; however, the path of the transfer of the commentary data Y is not limited to the example described above. For example, the commentary data Y may be directly transmitted from the control system 30 to the terminal apparatus 10. In addition, a configuration is assumed in which the commentary data Y generated by the control system 30 is transferred to, for example, the game server 50, and then the commentary data Y is transmitted from the game server 50 to the terminal apparatus 10. As shown above, a configuration in which the commentary data Y passes through the distribution system 40 is omitted. As in each of the foregoing embodiments, the video data D2 is transmitted from the distribution system 40 to the terminal apparatus 10.

As shown above, in a configuration in which a path, through which the commentary data Y is transmitted to the terminal apparatus 10, differs from a path, through which the video data D2 is transmitted to the terminal apparatus 10, information (hereinafter referred to as "location information") specifying the location of the video data D2 is preferably added to the commentary data Y. The location information is, for example, a uniform resource locator (URL) that specifies the location of the video data D2. According to the above configuration, the controller 11 of the terminal apparatus 10 not only acquires the commentary data Y but can also recognize the location of the video data D2. Therefore, the controller 11 can cause the play device 15 to play the commentary text C indicated by the commentary data Y and the game video G of the video data D2 indicated by the location information.

(4) In each of the foregoing embodiments, an example of a configuration is shown in which the distribution system 40 transmits the video data D2 to the terminal apparatus 10; however, the function of transmitting the video data D2 to the terminal apparatus 10 may be included in the control system 30. In other words, the video data D2 generated by the control system 30 may be directly transmitted to the terminal apparatus 10. In the above configuration, the distribution system 40, which is separate from the control system 30, is omitted.

(5) In each of the foregoing embodiments, the commentary data Y and the video data D2 are transmitted to the terminal apparatus 10 in real-time in parallel with the progress of the baseball game; however, the commentary data Y and the video data D2 may be transmitted to the terminal apparatus 10 after the termination of the baseball game.

For example, a configuration is assumed in which the commentary data Y and the video data D2 are generated after the termination of the baseball game. Specifically, the status data X and the video data D1 generated sequentially with the progress of the baseball game, and the setting data Z set in accordance with an instruction from the administrator Op1 are stored in the storage device 32 of the control system 30. After the termination of the baseball game, the information generator 312 uses the stored status data X and the stored setting data Z to generate the commentary data Y, and the video data editor 313 generates the video data D2 from the stored video data D1. The commentary data Y and the video data D2 are transmitted to the terminal apparatus 10 as in each of the foregoing embodiments. The status data X, the video data D1, and the setting data Z may be stored in the distribution system 40 or in the game server 50.

The commentary data Y generated by the information generator 312 and the video data D2 generated by the video data editor 313 may be stored in the storage device 32 of the control system 30, and the commentary data Y and the video data D2 may be transmitted to the terminal apparatus 10 after the end of the baseball game. In the above configuration, the commentary data Y corresponding to an event preferably includes the occurrence time x2 of the event in addition to the commentary text C. The occurrence time x2, which is information included in the status data X as shown in Fig. 5, is used to control the time at which the commentary text C is displayed. In other words, the controller 11 of the terminal apparatus 10 causes the display 151 to display the commentary text C, which is indicated by the commentary data Y, at the occurrence time x2 indicated by the commentary data Y in a period of time during which the game video G indicated by the video data D2 is played. According to the above configuration, even in a configuration in which the commentary data Y is separately provided from the video data D2, it is possible to play the commentary text C at an appropriate time for the game video G.

(6) In the third embodiment, an example of a configuration is shown in which the event type x3 is specified as the transmission condition; however, the contents of the transmission condition are not limited to the example described above. For example, the target player x4 or the target character x5 included in the status data X may be specified as the transmission condition. In a configuration in which the transmission condition includes the target player x4, only the status data X for the event caused by the target player x4 is transmitted from the game system 20. In a configuration in which the transmission condition includes the target character x5, the status data X is transmitted from the game system 20 only for the event in which the target character x5 is involved.

Similarly, in the fourth embodiment, an example of a configuration is shown in which the event type x3 is specified as the play condition; however, the contents of the play condition are not limited to the example described above. For example, the target player x4 or the target character x5 may be set as the play condition. In a configuration in which the play condition includes the target player x4, only the commentary text C for the event caused by the target player x4 is selectively displayed on the display 151. In a configuration in which the play condition includes the target character x5, only the commentary text C for the event in which the target character x5 is involved is selectively displayed on the display 151.

(7) In the third embodiment, the transmission condition is set in accordance with an instruction from the administrator Op2; however, a matter used to set the transmission condition is not limited to the example described above. For example, the transmission condition may be set in accordance with a rating (final/semifinal) of a match between the player Pa and the player Pb. For example, a configuration is assumed in which the transmission condition in a final is set less stringently than the transmission condition in a semifinal. In the above embodiment, commentary text C is more frequently provided to the terminal apparatus 10 in the final than in the semifinal. The transmission condition may be set in accordance with the total number of users U that are to view the distributed video V. For example, a configuration is assumed in which the transmission condition becomes relaxed as the total number of users U increases. In the above embodiment, the greater the total number of users U, the more frequently the commentary text C is provided to the terminal apparatus 10. As will be understood from the above description, an instruction from the administrator Op2 may be not required to set the transmission condition.

(8) In each of the foregoing embodiments, an example of the baseball game is shown in which the plurality of players P play against each other in a baseball; however, the type of game in the present invention may be freely selected. The event type x3 shown in each of the foregoing embodiments may be variously set in accordance with the type of game.

For example, each of the foregoing embodiments may be applied to a competitive game in which a plurality of players P play against each other in a sport other than baseball. For example, in a soccer game, an event types x3 such as "shoot," "goal kick," "off-side," and "goal" is assumed. In a fighting game, various event types x3 such as "an occurrence of a particular killer move," "an occurrence of N or more successive combos," "knockout," "down," and "used character change" are assumed. The present invention may be applied not only to a game in which a plurality of players P plays against each other, but also to a game in which a plurality of players P cooperates with each other to achieve an aim (for example, defeat of a boss-character). The present invention may be applied not only to a game played by a plurality of players P, but also to a game played by a single player P. For example, the present invention may be applied to a search game in which a single player P searches a virtual world. The present invention may be applied not only to the games described above, but also to various types of games, regardless of the number of players P, or regardless of the relationship between players P, such as a lottery game in which lottery processing such as a physical lottery or an electronic lottery is executed, a music game in which a player P operates in accordance with music, an action game in which a player P achieves various aims by operating a character for the player P.

(9) In each of the foregoing embodiments, an example of the supplementary data Q including the player name q1 and the total record q2 is shown; however, specific contents of the supplementary data Q are not limited to the example described above. For example, a rating (final/semifinal) of a match between the player Pa and the player Pb may be registered as the supplementary data Q. According to the above configuration, it is possible to generate commentary text C in accordance with a result of the match between the player Pa and the player Pb. For example, when the match is terminated in a situation in which "semifinal" is registered as the supplementary data Q, commentary text C such as "AAA goes to final!" can be generated. Alternatively, for example, when a competition event is assumed in which a plurality of players P plays against each other in a race game (for example, a time attack in which each player P competes with the others in running time), a configuration is preferable in which running time of each player P is registered as the supplementary data Q. According to the above configuration, it is possible to generate commentary text C such as "This running time is second in this competition!" immediately after the finish of a player P.

(10) In each of the foregoing embodiments, an example of the commentary text C constituted by text is shown; however, information (hereinafter referred to as "commentary information") indicative of a commentary on the status of the game is not limited to the commentary text C. For example, imagery indicative of the commentary on the status of the game may be displayed on the display 151 of the terminal apparatus 10 as the commentary information. In a configuration in which the commentary information is imagery, imagery data indicative of imagery for commentary, instead of the registered text r1 in the foregoing embodiments, is registered in the reference data R, for example. Alternatively, an audio sound indicative of the commentary on the status of the game may be emitted from the sound emitting device 152 of the terminal apparatus 10 as the commentary information. In a configuration in which the commentary information is an audio sound, audio sound data indicative of an audio sound for commentary, instead of the registered text r1 in the foregoing embodiments, is registered in the reference data R, for example. The audio sound data indicative of an audio sound for commentary may be generated by executing voice synthesis processing on the commentary text C generated in the same manner as in each of the foregoing embodiments. As will be understood from the above examples, the registered text r1 shown in each of the foregoing embodiments, the imagery for commentary, and the audio sound for commentary are comprehensively included in "registration information" used to generate the commentary information. In addition, "play" of the commentary information includes, for example, both emitting the audio sound for commentary and the display of the commentary text C or of the imagery for commentary.

(11) The functions of the control system 30 according to each of the foregoing embodiments are implemented by a combination of one or more processors (controller 31) and a program. The program according to each of the foregoing embodiments may be provided in a form stored in a computer-readable recording medium and may be installed in a computer. The recording medium is, for example, a non-transitory recording medium, and although an optical recording medium (an optical disk) such as a compact disk read-only memory (CD-ROM) is one example of the recording medium, the recording medium may also include a recording medium of any known form, such as a semiconductor recording medium or a magnetic recording medium. The non-transitory recording medium, which includes any recording medium except for a transitory, propagating signal, does not exclude a volatile recording medium. The non-transitory recording medium may be a storage apparatus in a distribution apparatus that stores a computer program for distribution via a communication network 2.

### Description of Reference Signs

1 ...information system, 2 ...communication network, 10 ...terminal apparatus, 11 ...controller, 111 ...reception processor, 112 ...condition setter, 113 ...play processor, 12 ...storage device, 13 ...communication device, 14 ...operation device, 15 ...play device, 151 ...display, 152 ...sound emitting device, 20 ...game system, 21 ...controller, 211 ...condition setter, 212 ...transmission processor, 22 ...storage device, 23 ...communication device, 24 (24a, 24b) ...game unit, 241 ...operation device, 242 ...display, 30 ...control system, 31 ...controller, 311 ...status data acquirer, 312 ...information generator, 313 ...video data editor, 314 ...setting data processor, 32 ...storage device, 33 ...communication device, 34 ...operation device, 35 ...display, 40 ...distribution system, 50 ... game server.

## Claims

1. An information system (1) comprising:
a game system (20) configured to progress a game played by one or more players (P, Pa, Pb);
a distribution system (40); and
a control system (30) configured to communicate with the game system (20) and the control the game system (20), wherein
the game system (20), the control system (30), and the distribution system (40) are communicable with each other via a communication network (2);
the distribution system (40) is communicable with a terminal apparatus (10) via the communication network (2);
the distribution system (40) is configured to distribute a distributed video (V) including a game video (G) of the game and a commentary text (C) in real time to the terminal apparatus (10) in parallel with the progress of the game;
the control system (30) comprises:
a status data acquirer (311) configured to acquire status data (X) indicative of a status of the game and video data (D1) indicative of the game video (G) of the game from the game system (20); and
an information generator (312) configured to generate commentary data (Y) from the status data (X) and video data (D2) from the video data (D1) received from the game system (20), the commentary data (Y) being text data indicative of the commentary text (C) to be displayed by the terminal apparatus (10) to which the game video (G) representative of the status of the game is delivered by the distribution system (40), the commentary text (C) being to be displayed by the terminal apparatus (10) in conjunction with the game video (G),
the information generator (312) is configured to use the status data (X) acquired by the status data acquirer (311) and setting data (Z) generated by a setting data processor (314) of the control system (30) and stored in a storage device (32) of the control system (30), the setting data (Z) specifying a commentary condition to generate the commentary text (C) on the status of the game under the commentary condition,
the status data (X) indicates an event occurring in the game, among different types of events generated at respective predetermined timings in accordance with progress of the game,
the respective status data (X) of each event includes respective control information (x7) that specifies a current numerical value for a variable that varies related to the game,
the setting data (Z) includes a plurality of pieces of registration information (r1) corresponding to the different events in the game,
the commentary text (C) includes the piece of registration information (r1) corresponding to the event indicated by the status data (X) among the plurality of pieces of registration information (r1),
the setting data (Z) includes, for one or more pieces of registration information (r1) among the plurality of pieces of registration information (r1), condition data (r3) indicative of a generation condition for the commentary text (C) including the piece of registration information (r1),
the condition data (r3) includes the control information (x7) as a variable for setting the generation condition for the respective commentary text (C) by the setting data processor (314) based on the control information included in the status data (X) received from the game system (20),
the information generator (312) is configured to generate the commentary text (C) including the piece of registration information (r1) corresponding to the event in response to satisfaction of the generation condition indicated by the condition data (r3) that corresponds to the piece of registration information (r1), and
the control system (30) is configured to transmit the generated commentary text (C) and the generated video data (D2) to the distribution system (40) for distribution to the terminal apparatus (10).

2. The information system (1) according to claim 1, wherein:
the setting data (Z) includes supplementary information (Q) not used in the game system (20), and
the commentary text (C) includes the supplementary information (Q).

3. The information system (1) according to claim 1 or 2, wherein:
the setting data (Z) includes, for each of the one or more players (P, Pa, Pb), permission data (r2) for each piece of registration information (r1) among a plurality of pieces of registration information (r1) corresponding to different events in the game, the permission data (r2) indicating whether to permit generation of commentary information (C) including a corresponding piece of registration information (r1), and
the information generator (312) is configured:
when permission data (r2) corresponding to a piece of registration information (r1) among the plurality of pieces of registration information (r1) indicates permission, to generate the commentary information (C) including the piece of registration information (r1); and
when the permission data (r2) indicates no permission, not to generate the commentary information (C) including the piece of registration information (r1).

4. The information system (1) according to any one of claims 1 to 2, wherein:
the one or more players (P, Pa, Pb) comprise a plurality of players including a first player and a second player,
the setting data (Z) includes:
first reference data in which a plurality of pieces of registration information (r1) corresponding to the first player is registered; and
second reference data in which a plurality of pieces of registration information (r1) corresponding to the second player is registered, and
the information generator (312) is configured to:
generate, for the first player, the commentary text (C) including one of the plurality of pieces of registration information (r1) registered in the first reference data; and
generate, for the second player, the commentary text (C) including one of the plurality of pieces of registration information (r1) registered in the second reference data.

5. The information system (1) according to any one of claims 1 to 4, wherein the game system (20) includes:
a first condition setter configured to set a condition for an event that is to occur in the game; and
a transmission processor configured to, in response to an occurrence of an event in the game, transmit status data (X) indicative of the event to the control system (30), the event satisfying the condition set by the first condition setter.

6. The information system (1) according to any one of claims 1 to 5, wherein:
the terminal apparatus (10) includes:
a reception processor configured to receive the commentary text (C) from the control system (30);
a play processor configured to play the game video (G); and
a second condition setter configured to set a play condition in accordance with an instruction from a user of the terminal apparatus (10), and
the play processor is configured to play a piece of commentary text (C) satisfying the play condition set by the second condition setter among a plurality of pieces of commentary text (C) in conjunction with the game video (G), the plurality of pieces of commentary text (C) being received sequentially by the reception processor.

7. A computer-implemented information processing method comprising:
acquiring status data (X) indicative of a status of a game and video data (D1) indicative of a game video (G) of the game from a game system (20) configured to progress the game played by one or more players (P, Pa, Pb);
communicating with and controlling the game system (20) by a control system (30), wherein the game system (20), the control system (30), and a distribution system (40) are communicable with each other via a communication network (2), wherein the distribution system (40) is communicable with a terminal apparatus (10) via the communication network (2);
distributing, by the distribution system (40), a distributed video (V) including the game video (G) of the game and a commentary text (C) in real time to the terminal apparatus (10) in parallel with the progress of the game; and
generating commentary data (Y) from the status data (X) and video data (D2) from the video data (D1) received from the game system (20), the commentary data (Y) being text data indicative of the commentary text (C) to be displayed by the terminal apparatus (10) to which the game video (G) representative of the status of the game is delivered by the distribution system (40), the commentary text (C) being to be displayed by the terminal apparatus (10) in conjunction with the game video (G), wherein
the generating of the commentary text (C) includes using the status data (X) and setting data (Z) generated by and stored in the control system (30), the setting data (Z) specifying a commentary condition to generate the commentary text (C) on the status of the game under the commentary condition,
the status data (X) indicates an event occurring in the game, among different types of events generated at respective predetermined timings in accordance with progress of the game,
the respective status data (X) of each event includes respective control information (x7) that specifies a current numerical value for a variable that varies related to the game,
the setting data (Z) includes a plurality of pieces of registration information (r1) corresponding to the different events in the game,
the commentary text (C) includes the piece of registration information (r1) corresponding to the event indicated by the status data (X) among the plurality of pieces of registration information (r1),
the setting data (Z) includes, for one or more pieces of registration information (r1) among the plurality of pieces of registration information (r1), condition data (r3) indicative of a generation condition for the commentary text (C) including the piece of registration information (r1),
the condition data (r3) includes the control information (x7) as a variable for setting the generation condition for the respective commentary text (C) by the setting data processor (314) based on the control information included in the status data (X) received from the game system (20),
the commentary text (C) including the piece of registration information (r1) corresponding to the event is generated in response to satisfaction of the generation condition indicated by the condition data (r3) that corresponds to the piece of registration information (r1), and
the generated commentary text (C) and the generated video data (D2) are transmitted from the control system (30) to the distribution system (40) for distribution to the terminal apparatus (10).

8. A computer program comprising instructions which, when the program is executed by a computer system, causes the computer system to carry out the method of claim 7.

## Patentansprüche

1. Informationssystem (1), aufweisend:
ein Spielsystem (20), das konfiguriert ist, um ein Spiel, das von einem oder mehreren Spielern (P, Pa, Pb) gespielt wird, fortzuführen;
ein Verteilungssystem (40); und
ein Steuerungssystem (30), das konfiguriert ist, um mit dem Spielsystem (20) zu kommunizieren und das Spielsystem (20) zu steuern, wobei
das Spielsystem (20), das Steuerungssystem (30) und das Verteilungssystem (40) über ein Kommunikationsnetzwerk (2) einander mitteilbar sind;
das Verteilungssystem (40) über das Kommunikationsnetzwerk (2) mit einem Endgeräteapparat (10) mitteilbar ist;
das Verteilungssystem (40) konfiguriert ist, um ein verteiltes Video (V), das ein Spielvideo (G) des Spiels und einen Kommentartext (C) enthält, parallel zu dem Fortführen des Spiels in Echtzeit an den Endgeräteapparat (10) zu verteilen;
das Steuerungssystem (30) aufweist:
eine Statusdaten-Erlangungseinrichtung (311), die konfiguriert ist, um Statusdaten (X), die einen Status des Spiels angeben, und Videodaten (D1), die das Spielvideo (G) des Spiels angeben, von dem Spielsystem (20) zu erlangen; und
eine Informationserzeugungseinrichtung (312), die konfiguriert ist, um Kommentardaten (Y) aus den Statusdaten (X) und Videodaten (D2) aus den Videodaten (D1), die von dem Spielsystem (20) empfangen werden, zu erzeugen, wobei die Kommentardaten (Y) Textdaten sind, die den Kommentartext (C) angeben, der durch den Endgeräteapparat (10) angezeigt werden soll, an den das Spielvideo (G), das repräsentativ für den Status des Spiels ist, durch das Verteilungssystem (40) geliefert wird, wobei der Kommentartext (C) durch den Endgeräteapparat (10) in Verbindung mit dem Spielvideo (G) angezeigt werden soll,
die Informationserzeugungseinrichtung (312) konfiguriert ist, um die Statusdaten (X), die durch die Statusdaten-Erlangungseinrichtung (311) erlangt werden, und Einstelldaten (Z), die durch einen Einstelldaten-Verarbeitungseinrichtung (314) des Steuerungssystems (30) erzeugt werden und in eine Speichervorrichtung (32) des Steuerungssystems (30) gespeichert werden, zu verwenden, wobei die Einstelldaten (Z) eine Kommentarbedingung spezifizieren, um den Kommentartext (C) über den Status des Spiels gemäß der Kommentarbedingung zu erzeugen,
die Statusdaten (X) ein Ereignis, das in dem Spiel stattfindet, unter verschiedenen Typen von Ereignissen, die zu jeweiligen vorbestimmten Timings in Übereinstimmung mit dem Fortführen des Spiels erzeugt werden, angeben,
die jeweiligen Statusdaten (X) jedes Ereignisses jeweilige Steuerungsinformationen (x7) enthalten, die einen gegenwärtigen numerischen Wert für eine Variable, die in Bezug auf das Spiel variiert, spezifizieren,
die Einstelldaten (Z) eine Vielzahl von Stücken von Registrierungsinformationen (r1) enthalten, die den verschiedenen Ereignissen in dem Spiel entsprechen,
der Kommentartext (C) das Stück von Registrierungsinformationen (r1), das dem Ereignis entspricht, das durch die Statusdaten (X) angegeben wird, unter der Vielzahl von Stücken von Registrierungsinformationen (r1) enthält,
die Einstelldaten (Z) für ein oder mehrere Stücke von Registrierungsinformationen (r1) unter der Vielzahl von Stücken von Registrierungsinformationen (r1) Bedingungsdaten (r3) enthalten, die eine Erzeugungsbedingung für den Kommentartext (C), der das Stück von Registrierungsinformationen (r1) enthält, angeben,
die Bedingungsdaten (r3) die Steuerungsinformationen (x7) als eine Variable zum Einstellen der Erzeugungsbedingung für den jeweiligen Kommentartext (C) durch die Einstelldaten-Verarbeitungseinrichtung (314) basierend auf den Steuerungsinformationen, die in den Statusdaten (X) enthalten sind, die von dem Spielsystem (20) empfangen werden, enthalten,
die Informationserzeugungseinrichtung (312) konfiguriert ist, um den Kommentartext (C), der das Stück von Registrierungsinformationen (r1) enthält, das dem Ereignis entspricht, in Erwiderung auf eine Erfüllung der Erzeugungsbedingung, die durch die Bedingungsdaten (r3) angegeben wird, die dem Stück von Registrierungsinformationen (r1) entsprechen, zu erzeugen, und
das Steuerungssystem (30) konfiguriert ist, um den erzeugten Kommentartext (C) und die erzeugten Videodaten (D2) an das Verteilungssystem (40) zur Verteilung an den Endgeräteapparat (10) zu übertragen.

2. Informationssystem (1) nach Anspruch 1, wobei:
die Einstelldaten (Z) Zusatzinformationen (Q) enthalten, die in dem Spielsystem (20) nicht verwendet werden, und
der Kommentartext (C) die Zusatzinformationen (Q) enthält.

3. Informationssystem (1) nach Anspruch 1 oder 2, wobei:
die Einstelldaten (Z) für jeden des einen oder der mehreren Spieler (P, Pa, Pb) Erlaubnisdaten (r2) für jedes Stück von Registrierungsinformationen (r1) unter einer Vielzahl von Stücken von Registrierungsinformationen (r1), die verschiedenen Ereignissen in dem Spiel entsprechen, enthalten, wobei die Erlaubnisdaten (r2) kennzeichnen, ob eine Erzeugung von Kommentarinformationen (C), die ein entsprechendes Stück von Registrierungsinformationen (r1) enthalten, erlaubt werden soll, und
die Informationserzeugungseinrichtung (312) konfiguriert ist, um:
wenn Erlaubnisdaten (r2), die einem Stück von Registrierungsinformationen (r1) unter der Vielzahl von Stücken von Registrierungsinformationen (r1) entsprechen, eine Erlaubnis kennzeichnen, die Kommentarinformationen (C), die das Stück von Registrierungsinformationen (r1) enthalten, zu erzeugen; und
wenn die Erlaubnisdaten (r2) keine Erlaubnis kennzeichnen, die Kommentarinformationen (C), die das Stück von Registrierungsinformationen (r1) enthalten, nicht zu erzeugen.

4. Informationssystem (1) nach einem der Ansprüche 1 bis 2, wobei:
der eine oder die mehreren Spieler (P, Pa, Pb) eine Vielzahl von Spielern aufweisen, die einen ersten Spieler und einen zweiten Spieler enthalten,
die Einstelldaten (Z) enthalten:
erste Referenzdaten, in denen eine Vielzahl von Stücken von Registrierungsinformationen (r1), die dem ersten Spieler entsprechen, registriert ist; und
zweite Referenzdaten, in denen eine Vielzahl von Stücken von Registrierungsinformationen (r1), die dem zweiten Spieler entsprechen, registriert ist, und
die Informationserzeugungseinrichtung (312) konfiguriert ist, um:
für den ersten Spieler den Kommentartext (C) zu erzeugen, der eines der Vielzahl von Stücken von Registrierungsinformationen (r1) enthält, die in den ersten Referenzdaten registriert sind; und
für den zweiten Spieler den Kommentartext (C) zu erzeugen, der eines der Vielzahl von Stücken von Registrierungsinformationen (r1) enthält, die in den zweiten Referenzdaten registriert sind.

5. Informationssystem (1) nach einem der Ansprüche 1 bis 4, wobei das Spielsystem (20) enthält:
eine erste Bedingungseinstelleinrichtung, die konfiguriert ist, um eine Bedingung für ein Ereignis einzustellen, das in dem Spiel stattfinden soll; und
eine Übertragungsverarbeitungseinrichtung, die konfiguriert ist, um in Erwiderung auf ein Stattfinden eines Ereignisses in dem Spiel Statusdaten (X), die das Ereignis angeben, an das Steuerungssystem (30) zu übertragen, wobei das Ereignis die Bedingung erfüllt, die durch die erste Bedingungseinstelleinrichtung eingestellt wird.

6. Informationssystem (1) nach einem der Ansprüche 1 bis 5, wobei:
der Endgeräteapparat (10) enthält:
eine Empfangsverarbeitungseinrichtung, die konfiguriert ist, um den Kommentartext (C) von dem Steuerungssystem (30) zu empfangen;
eine Wiedergabeverarbeitungseinrichtung, die konfiguriert ist, um das Spielvideo (G) wiederzugeben; und
eine zweite Bedingungseinstelleinrichtung, die konfiguriert ist, um eine Wiedergabebedingung in Übereinstimmung mit einer Anweisung von einem Benutzer des Endgeräteapparats (10) einzustellen, und
die Wiedergabeverarbeitungseinrichtung konfiguriert ist, um ein Stück des Kommentartexts (C), das die Wiedergabebedingung erfüllt, die durch die zweite Bedingungseinstelleinrichtung eingestellt wird, unter einer Vielzahl von Stücken von Kommentartext (C) in Verbindung mit dem Spielvideo (G) wiederzugeben, wobei die Vielzahl von Stücken von Kommentartext (C) durch die Empfangsverarbeitungseinrichtung sequentiell empfangen werden.

7. Computerimplementiertes Informationsverarbeitungsverfahren, aufweisend:
ein Erlangen von Statusdaten (X), die einen Status eines Spiels angeben, und von Videodaten (D1), die ein Spielvideo (G) des Spiels angeben, von einem Spielsystem (20), das konfiguriert ist, um das Spiel, das von einem oder mehreren Spielern (P, Pa, Pb) gespielt wird, fortzuführen;
ein Kommunizieren mit dem Spielsystem (20) und ein Steuern von diesem durch ein Steuerungssystem (30), wobei das Spielsystem (20), das Steuerungssystem (30) und ein Verteilungssystem (40) über ein Kommunikationsnetzwerk (2) einander mitteilbar sind, wobei das Verteilungssystem (40) über das Kommunikationsnetzwerk (2) mit einem Endgeräteapparat (10) mitteilbar ist;
ein Verteilen, durch das Verteilungssystem (40), eines verteilten Videos (V), das das Spielvideo (G) des Spiels und einen Kommentartext (C) enthält, parallel zu dem Fortführen des Spiels in Echtzeit an den Endgeräteapparat (10); und
ein Erzeugen von Kommentardaten (Y) aus den Statusdaten (X) und Videodaten (D2) aus den Videodaten (D1), die von dem Spielsystem (20) empfangen werden, wobei die Kommentardaten (Y) Textdaten sind, die den Kommentartext (C) angeben, der durch den Endgeräteapparat (10) angezeigt werden soll, an den das Spielvideo (G), das repräsentativ für den Status des Spiels ist, durch das Verteilungssystem (40) geliefert wird, wobei der Kommentartext (C) durch den Endgeräteapparat (10) in Verbindung mit dem Spielvideo (G) angezeigt werden soll, wobei
das Erzeugen des Kommentartexts (C) ein Verwenden der Statusdaten (X) und Einstelldaten (Z), die durch das Steuerungssystem (30) erzeugt werden und in diesem gespeichert werden, enthält, wobei die Einstelldaten (Z) eine Kommentarbedingung spezifizieren, um den Kommentartext (C) über den Status des Spiels gemäß der Kommentarbedingung zu erzeugen,
die Statusdaten (X) ein Ereignis, das in dem Spiel stattfindet, unter verschiedenen Typen von Ereignissen, die zu jeweiligen vorbestimmten Timings in Übereinstimmung mit dem Fortführen des Spiels erzeugt werden, angeben,
die jeweiligen Statusdaten (X) jedes Ereignisses jeweilige Steuerungsinformationen (x7) enthalten, die einen gegenwärtigen numerischen Wert für eine Variable, die in Bezug auf das Spiel variiert, spezifizieren,
die Einstelldaten (Z) eine Vielzahl von Stücken von Registrierungsinformationen (r1) enthalten, die den verschiedenen Ereignissen in dem Spiel entsprechen,
der Kommentartext (C) das Stück von Registrierungsinformationen (r1), das dem Ereignis entspricht, das durch die Statusdaten (X) angegeben wird, unter der Vielzahl von Stücken von Registrierungsinformationen (r1) enthält,
die Einstelldaten (Z) für ein oder mehrere Stücke von Registrierungsinformationen (r1) unter der Vielzahl von Stücken von Registrierungsinformationen (r1) Bedingungsdaten (r3) enthalten, die eine Erzeugungsbedingung für den Kommentartext (C), der das Stück von Registrierungsinformationen (r1) enthält, angeben,
die Bedingungsdaten (r3) die Steuerungsinformationen (x7) als eine Variable zum Einstellen der Erzeugungsbedingung für den jeweiligen Kommentartext (C) durch die Einstelldaten-Verarbeitungseinrichtung (314) basierend auf den Steuerungsinformationen, die in den Statusdaten (X) enthalten sind, die von dem Spielsystem (20) empfangen werden, enthalten,
der Kommentartext (C), der das Stück von Registrierungsinformationen (r1) enthält, das dem Ereignis entspricht, in Erwiderung auf eine Erfüllung der Erzeugungsbedingung, die durch die Bedingungsdaten (r3) angegeben wird, die dem Stück von Registrierungsinformationen (r1) entsprechen, erzeugt wird, und
der erzeugte Kommentartext (C) und die erzeugten Videodaten (D2) von dem Steuerungssystem (30) an das Verteilungssystem (40) zur Verteilung an den Endgeräteapparat (10) übertragen werden.

8. Computerprogramm, aufweisend Anweisungen, die, wenn das Programm durch ein Computersystem ausgeführt wird, das Computersystem veranlassen, das Verfahren nach Anspruch 7 auszuführen.

## Revendications

1. Système d'informations (1) comprenant :
un système de jeu (20) configuré pour faire progresser un jeu joué par un ou plusieurs joueurs (P, Pa, Pb) ;
un système de distribution (40) ; et
un système de commande (30) configuré pour communiquer avec le système de jeu (20) et pour commander le système de jeu (20), dans lequel
le système de jeu (20), le système de commande (30) et le système de distribution (40) peuvent communiquer entre eux via un réseau de communication (2) ;
le système de distribution (40) peut communiquer avec un appareil terminal (10) via le réseau de communication (2) ;
le système de distribution (40) est configuré pour distribuer une vidéo distribuée (V) incluant une vidéo de jeu (G) du jeu et un texte de commentaire (C) en temps réel à l'appareil terminal (10) en parallèle avec la progression du jeu ;
le système de commande (30) comprend :
un acquéreur de données d'état (311) configuré pour acquérir des données d'état (X) indiquant un état du jeu et des données vidéo (D1) indiquant la vidéo de jeu (G) du jeu à partir du système de jeu (20) ; et
un générateur d'informations (312) configuré pour générer des données de commentaire (Y) à partir des données d'état (X) et des données vidéo (D2) à partir des données vidéo (D1) reçues du système de jeu (20), les données de commentaire (Y) étant des données textuelles indiquant le texte de commentaire (C) à afficher par l'appareil terminal (10) auquel la vidéo de jeu (G) représentant l'état du jeu est transmise par le système de distribution (40), le texte de commentaire (C) devant être affiché par l'appareil terminal (10) conjointement avec la vidéo de jeu (G),
le générateur d'informations (312) est configuré pour utiliser les données d'état (X) acquises par l'acquéreur de données d'état (311) et des données de paramétrage (Z) générées par un processeur de données de paramétrage (314) du système de commande (30) et stockées dans un dispositif de stockage (32) du
système de commande (30), les données de paramétrage (Z) spécifiant une condition de commentaire pour générer le texte de commentaire (C) sur l'état du jeu dans la condition de commentaire, les données d'état (X) indiquent un événement survenant dans le jeu, parmi différents types d'événements générés à des moments prédéterminés respectifs en fonction de la progression du jeu,
les données d'état (X) respectives de chaque événement incluent des informations de commande (x7) respectives qui spécifient une valeur numérique actuelle pour une variable qui varie en fonction du jeu,
les données de paramétrage (Z) incluant une pluralité d'éléments d'informations d'enregistrement (r1) correspondant aux différents événements du jeu,
le texte de commentaire (C) inclut l'élément d'informations d'enregistrement (r1) correspondant à l'événement indiqué par les données d'état (X) parmi la pluralité d'éléments d'informations d'enregistrement (r1),
les données de paramétrage (Z) incluent, pour un ou plusieurs éléments d'informations d'enregistrement (r1) parmi la pluralité d'éléments d'informations d'enregistrement (r1), des données de condition (r3) indiquant une condition de génération pour le texte de commentaire (C) incluant l'élément d'informations d'enregistrement (r1),
les données de condition (r3) comprennent les informations de commande (x7) comme variable pour paramétrer la condition de génération du texte de commentaire (C) respectif par le processeur de données de paramétrage (314) sur la base des informations de commande incluses dans les données d'état (X) reçues du système de jeu (20),
le générateur d'informations (312) est configuré pour générer le texte de commentaire (C) incluant l'élément d'informations d'enregistrement (r1) correspondant à l'événement en réponse à la satisfaction de la condition de génération indiquée par les données de condition (r3) qui correspondent à l'élément d'informations d'enregistrement (r1), et
le système de commande (30) est configuré pour transmettre le texte de commentaire (C) généré et les données vidéo (D2) générées au système de distribution (40) pour distribution à l'appareil terminal (10).

2. Système d'informations (1) selon la revendication 1, dans lequel :
les données de paramétrage (Z) incluent des informations supplémentaires (Q) non utilisées dans le système de jeu (20), et
le texte de commentaire (C) inclut les informations supplémentaires (Q).

3. Système d'informations (1) selon la revendication 1 ou 2, dans lequel :
les données de paramétrage (Z) incluent, pour chacun des un ou plusieurs joueurs (P, Pa, Pb), des données d'autorisation (r2) pour chaque élément d'informations d'enregistrement (r1) parmi une pluralité d'éléments d'informations d'enregistrement (r1) correspondant à différents événements du jeu, les données d'autorisation (r2) indiquant s'il faut autoriser la génération d'informations de commentaire (C) incluant un élément d'informations d'enregistrement (r1) correspondant, et
le générateur d'informations (312) est configuré :
lorsque les données d'autorisation (r2) correspondant à un élément d'informations d'enregistrement (r1) parmi la pluralité d'éléments d'informations d'enregistrement (r1) indiquent l'autorisation, pour générer les informations de commentaire (C) incluant l'élément d'informations d'enregistrement (r1) ; et
lorsque les données d'autorisation (r2) n'indiquent aucune autorisation, pour ne pas générer les informations de commentaire (C) incluant l'élément d'informations d'enregistrement (r1).

4. Système d'informations (1) selon l'une quelconque des revendications 1 à 2, dans lequel :
les un ou plusieurs joueurs (P, Pa, Pb) comprennent une pluralité de joueurs incluant un premier joueur et un second joueur,
les données de paramétrage (Z) incluent :
des premières données de référence dans lesquelles une pluralité d'éléments d'informations d'enregistrement (r1) correspondant au premier joueur sont enregistrés ; et
des secondes données de référence dans lesquelles une pluralité d'éléments d'informations d'enregistrement (r1) correspondant au second joueur sont enregistrés, et
le générateur d'informations (312) est configuré pour :
générer, pour le premier joueur, le texte de commentaire (C) incluant l'un de la pluralité d'éléments d'informations d'enregistrement (r1) enregistrés dans les premières données de référence ; et
générer, pour le second joueur, le texte de commentaire (C) incluant l'un de la pluralités d'éléments d'informations d'enregistrement (r1) enregistrés dans les secondes données de référence.

5. Système d'informations (1) selon l'une quelconque des revendications 1 à 4, dans lequel le système de jeu (20) inclut :
un premier paramétreur de condition configuré pour paramétrer une condition pour un événement qui doit se produire dans le jeu ; et
un processeur de transmission configuré pour, en réponse à une survenue d'un événement dans le jeu, transmettre des données d'état (X) indiquant l'événement au système de commande (30), l'événement satisfaisant la condition paramétrée par le premier paramétreur de condition.

6. Système d'informations (1) selon l'une quelconque des revendications 1 à 5, dans lequel :
l'appareil terminal (10) inclut :
un processeur de réception configuré pour recevoir le texte de commentaire (C) du système de commande (30);
un processeur de lecture configuré pour lire la vidéo de jeu (G) ; et
un second paramétreur de condition configuré pour paramétrer une condition de jeu en fonction d'une instruction d'un utilisateur de l'appareil terminal (10), et
le processeur de lecture est configuré pour lire un élément de texte de commentaire (C) satisfaisant la condition de lecture paramétrée par le second paramétreur de condition parmi une pluralité d'éléments de texte de commentaire (C) en conjonction avec la vidéo de jeu (G), la pluralité d'éléments de texte de commentaire (C) étant reçus séquentiellement par le processeur de réception.

7. Procédé, mis en œuvre par ordinateur, de traitement d'informations, comprenant :
l'acquisition de données d'état (X) indiquant un état d'un jeu et de données vidéo (D1) indiquant une vidéo de jeu (G) du jeu à partir d'un système de jeu (20) configuré pour faire progresser le jeu joué par un ou plusieurs joueurs (P, Pa, Pb) ;
la communication avec le et la commande du système de jeu (20) par un système de commande (30), dans lequel le système de jeu (20), le système de commande (30) et un système de distribution (40) peuvent communiquer entre eux via un réseau de communication (2), dans lequel le système de distribution (40) peut communiquer avec un appareil terminal (10) via le réseau de communication (2) ;
la distribution, par le système de distribution (40), d'une vidéo distribuée (V) incluant la vidéo de jeu (G) et un texte de commentaire (C) en temps réel vers l'appareil terminal (10) en parallèle avec la progression du jeu ; et
la génération de données de commentaire (Y) à partir des données d'état (X) et de données vidéo (D2) à partir des données vidéo (D1) reçues du système de jeu (20), les données de commentaire (Y) étant des données textuelles indiquant le texte de commentaire (C) à afficher par l'appareil terminal (10) auquel la vidéo de jeu (G) représentant l'état du jeu est transmise par le système de distribution (40), le texte de commentaire (C) devant être affiché par l'appareil terminal (10) conjointement avec la vidéo de jeu (G), dans lequel
la génération du texte de commentaire (C) inclut l'utilisation des données d'état (X) et des données de paramétrage (Z) générées et stockées dans le système de commande (30), les données de paramétrage (Z) spécifiant une condition de commentaire pour générer le texte de commentaire (C) sur l'état du jeu dans la condition de commentaire,
les données d'état (X) indiquent un événement survenant dans le jeu, parmi différents types d'événements générés à des moments prédéterminés respectifs en fonction de la progression du jeu,
les données d'état (X) respectives de chaque événement incluent des informations de commande (x7) respectives qui spécifient une valeur numérique actuelle pour une variable qui varie en fonction du jeu,
les données de paramétrage (Z) incluent une pluralité d'éléments d'informations d'enregistrement (r1) correspondant aux différents événements du jeu,
le texte de commentaire (C) inclut l'élément d'informations d'enregistrement (r1) correspondant à l'événement indiqué par les données d'état (X) parmi la pluralité d'éléments d'informations d'enregistrement (r1),
les données de paramétrage (Z) incluent, pour un ou plusieurs éléments d'informations d'enregistrement (r1) parmi la pluralité d'éléments d'informations d'enregistrement (r1), des données de condition (r3) indiquant une condition de génération pour le texte de commentaire (C) incluant l'élément d'informations d'enregistrement (r1),
les données de condition (r3) incluent les informations de commande (x7) comme variable pour paramétrer la condition de génération du texte de commentaire (C) respectif par le processeur de données de paramétrage (314) sur la base des informations de commande incluses dans les données d'état (X) reçues du système de jeu (20),
le texte de commentaire (C), incluant l'élément d'informations d'enregistrement (r1) correspondant à l'événement, est généré en réponse à la satisfaction de la
condition de génération indiquée par les données de condition (r3) qui correspondent à l'élément d'informations d'enregistrement (r1), et
le texte de commentaire (C) généré et les données vidéo (D2) générées sont transmis du système de commande (30) au système de distribution (40) pour distribution à l'appareil terminal (10).

8. Programme informatique comprenant des instructions qui, lorsque le programme est exécuté par un système informatique, amènent le système informatique à réaliser le procédé selon la revendication 7.
